(19) Europäisches Patentamt
European Patent Office
Office européen des brevets

(11) **EP 3 176 939 B1**

(12) **EUROPEAN PATENT SPECIFICATION**

(45) Date of publication and mention of the grant of the patent:
**21.11.2018 Bulletin 2018/47**

(51) Int Cl.:
*H02M 1/12* *(2006.01)*    *H02J 3/26* *(2006.01)*
*G05F 1/67* *(2006.01)*    *H02H 7/122* *(2006.01)*
*H02M 1/32* *(2007.01)*    *H02J 3/38* *(2006.01)*
*H02M 7/5387* *(2007.01)*    *H02M 7/5395* *(2006.01)*

(21) Application number: **15828196.4**

(22) Date of filing: **18.05.2015**

(86) International application number:
**PCT/JP2015/064151**

(87) International publication number:
**WO 2016/017244 (04.02.2016 Gazette 2016/05)**

(54) **POWER CONVERSION CONTROL DEVICE AND SOLAR POWER GENERATION SYSTEM**

ENERGIEUMWANDLUNGSSTEUERUNGSVORRICHTUNG UND SONNENENERGIEERZEUGUNGSSYSTEM

DISPOSITIF DE COMMANDE DE CONVERSION DE PUISSANCE ET SYSTÈME DE GÉNÉRATION DE PUISSANCE SOLAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2014 JP 2014155470**

(43) Date of publication of application:
**07.06.2017 Bulletin 2017/23**

(73) Proprietor: **Hitachi Industrial Equipment Systems Co., Ltd.**
**Chiyoda-ku**
**Tokyo 101-0022 (JP)**

(72) Inventors:
• **FURUTA, Futoshi**
**Tokyo 100-8280 (JP)**
• **MATSUNAGA, Shunsuke**
**Tokyo 101-0022 (JP)**
• **KURITA, Masanori**
**Tokyo 101-0022 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
EP-A1- 2 003 758    EP-A1- 2 680 426
EP-A2- 0 370 388    WO-A1-2012/114469
JP-A- H07 123 726    JP-A- H07 123 726
JP-A- 2000 358 374    JP-A- 2000 358 374
JP-A- 2002 238 163    JP-A- 2002 238 163
KR-A- 20120 039 722    US-A1- 2012 230 066

**Description**

Technical Field

The present invention relates to electric power conversion control apparatuses and photovoltaic power generation systems, and in particular relates to a technology effective for controlling the operation of a method in which electric power systems are supplied with stable electric powers.

Background Art

In accordance with the growing interest in renewable energies in recent years and the introduction of The Excess Electricity Purchasing Scheme legislated by the Japanese government, photovoltaic power generation systems based on photovoltaics (PVs) have been widely spreading.

Consequently a power conditioning system using which the electric powers of photovoltaics are effectively distributed into electric power systems in a photovoltaic power generation system is highly required.

The fundamental function of a power conditioning system is to make the voltage and frequency of the output of the power conditioning system coincide with those of each electric power system, and to convert the DC electric power generated by PVs into AC electric power. However there is a possibility that, because there arises a difference between the output voltage of a power conditioning system and the voltage of an electric power system when the voltage of the electric power system abruptly changes owing to a fault such as breaking or disconnection, an excess current flows and the internal elements and the like of the power conditioning system are damaged in some cases. In order to prevent such an accident, the power conditioning system is provided with a function that detects an excess current and kills the connection between the power conditioning system and the electric power system, that is to say, a parallel-off function.

However, as the number of power conditioning systems that connect with an electric power system increases along with the increase in the number of photovoltaic power generation systems, influences that the behaviors of the respective power conditioning systems have on the electric power system have been becoming unignorable.

Therefore, power conditioning systems that have been shipped after the fiscal 2014 are required to satisfy the Fault Ride Through (FRT) requirement, that is to say, the power conditioning systems are required to continue their operations without carrying out their parallel-off functions in the case where voltage reductions continue during a certain period or shorter and the values of the voltage reductions are within a certain range in compliance with, for example, Grid-interconnection Code
JEAC-9701-2013 stipulated by The Japan Electric Association.

In this case, in order to continue the operation of a power conditioning system when a voltage abruptly changes owing to the fault of the relevant electric power system, it is necessary that two problems, that is to say, how to suppress an excess current and how to suppress an unbalanced current that are generated owing to the abrupt change of the voltage should be solved at the same time. The voltage abruptly changes during the transient period from the time when the voltage is in its normal state to the time when the voltage becomes stable in its reduced state owing to a fault.

In addition, because most of the faults of an electric power system are one-line ground faults or short-circuit-between-two-lines faults, even if the voltage is stable in its reduced and changeless state, the values of the three-phase-sequence components of the voltage are in an unbalanced state in which the values are reduced with different ratios respectively in comparison with their normal values.

With regard to the suppression of an excess current, a technology in which the inductance components of a lowpass filter inserted between a main circuit included in a power conditioning system and an electric power system are increased, a technology in which a time period from the time when the voltage change of an electric power system is detected to the time when this detection result is reflected in the output of the electric power system is shortened, and the like are well known.

These technologies are heavily dependent on hardware including lowpass filters, microcomputers for implementing control and the like, which leads to the increase of the total cost of a power conditioning system. Therefore, a prudent examination is needed in accordance with the capability of the power conditioning system such as the rated current and the control cycle of the power conditioning system, and the FRT requirement, that is to say, in accordance with the degree of excess current suppression.

The abovementioned second problem, that is to say, how to suppress an unbalanced current is achieved, for example, by extracting the negative-phase-sequence component of the voltage of an electric power system and by compensating for the unbalanced state of the electric power system. As a method for extracting the negative-phase-sequence component of an electric power system, a technology in which phase-shift filter is used (refer to Nonpatent Literature 1, for example), a technology in which Fourier transformation is used (refer to Nonpatent Literature 2, for example), and the like are proposed. Because any of these technologies uses filters in which it takes considerable times for the output signals of the filters to converge, it is difficult to cope with the abrupt voltage change of the electric power system.

In addition, as a technology in which a negative-phase-sequence component is eliminated in the normal state of an electric power system, and an excess current is suppressed in the state of the abrupt voltage change of the electric power system, a control technology, in which the voltage difference between before and after a filter for extracting the negative-phase-sequence component, that is to say, the voltage difference between the input voltage and the output voltage of the filter is detected, a current is prevented from passing through the filter in a transient time period during which a voltage abruptly changes, and a current is allowed to pass through the filter in a stable state during which a voltage does not change abruptly (refer to Patent Literature 1, for example), a control technology in which the D axis voltage or the Q axis voltage of an electric power system is observed, and when any voltage abruptly changes, the filter is switched on the basis of the difference value between voltage values before and after the abrupt voltage change (refer to Patent Literature 2, for example), and the like are well known.

Citation List

Patent Literature

Patent Literature 1: Japanese Unexamined Patent Application Publication No. Hei7 (1995)-12376
Patent Literature 2: Japanese Unexamined Patent Application Publication No. 2004-153957

Nonpatent Literature

Nonpatent Literature 1: A. V. Timbus, et al., IEEE ISIE 2006
Nonpatent Literature 1: B. P. McGrath, et al., IEEE Trans on Power Electronics, vol. 20, No. 4, 2005. pp. 877-884

Summary of Invention

Technical Problem

In the case of an instantaneous voltage reduction, it is necessary to reflect the voltage change of an electric power system in the control of an excess current as soon as possible in order to suppress the excess current. On the other hand, in the filtering processing for unbalance compensation, because it takes several ms to several tens of ms for the output signals of the filters to converge, it has been difficult to solve the abovementioned two problems.

Furthermore, in the technologies disclosed in Patent Literatures 1 and 2, the unbalance compensation is not executed in a proactive manner. In other words, in the technologies, because the detection of an abrupt voltage change and the switching of filters in the state of a negative-phase-sequence component being eliminated are executed, it is impossible to cope with both abrupt voltage change and unbalance compensation at the same time.

One of the objects of the present invention is to provide a technology in which, in the case of the instantaneous voltage reduction of an electric power system, an excess current is suppressed, and at the same time, an unbalanced current can be suppressed by unbalance compensation when the voltage reduction of the electric power system occurs.

The abovementioned object and other objects and new features of the present invention will be revealed in association with the description of the present invention and the accompanying drawings hereinafter.

Solution to Problem

To solve the problems, the features of the independent claims are suggested. Preferred developments are in the dependent claims.

In other words, the representative electric power conversion control apparatus includes a main circuit unit, a filter unit, a current control unit. The main circuit unit converts a DC voltage generated by photovoltaics into an AC voltage on the basis of a PWM signal to supply an electric power system with the AC voltage. The filter unit eliminates the harmonic components of the AC voltages output from the main circuit unit.

The current control unit generates a current control signal for correcting a current flowing through the electric power system on the basis of an instruction value issued through MPPT control and the current flowing through the electric power system. The voltage control unit includes a compensation signal generation unit that generates a voltage compensation signal and an excess current suppression unit that suppresses an excess current flowing through the filter unit on the basis of the current control signal and a detected voltage.

In particular, the excess current suppression unit calculates an abrupt change amount showing the change ratio of the voltage of the electric power system using an input voltage before separating a positive-phase-sequence component and a negative-phase-sequence component of the voltage of the electric power system and an output voltage obtained after separating the positive-phase-sequence component and the negative-phase-sequence component, and if the abrupt change amount is larger than a first threshold, the input voltage is set as an detected voltage, and if the abrupt change amount is smaller than the first threshold, the output voltage is set as the detected voltage.

Advantageous Effects of Invention

The advantageous effects obtained by the representative invention among inventions disclosed in this application are briefly described as follows.

(1) The reliabilities of an electric power conversion control apparatus and a photovoltaic power generation system can be improved.
(2) The costs of the electric power conversion control apparatus and the photovoltaic power generation system can be reduced.

Brief Description of Drawings

Fig. 1 is an explanatory diagram showing an example of the configuration of a photovoltaic power generation system according to a first embodiment of the present invention.
Fig. 2 is an explanatory diagram showing an example of a user interface shown in Fig. 1.
Fig. 3 is a flowchart showing an example of threshold setting processing executed using the user interface shown in Fig. 1.
Fig. 4 is an explanatory diagram showing an example of the configuration of a voltage control unit included in a control unit of a power conditioning system shown in Fig. 1.
Fig. 5 is an explanatory diagram showing examples of the waveforms at the respective axes to the D axis/Q axis in the voltage control unit shown in Fig. 4.
Fig. 6 is a flowchart showing an example of program processing executed at the voltage control stage of a voltage control unit according to a second embodiment of the present invention.
Fig. 7 is an explanatory diagram showing an example of the configuration of a photovoltaic power generation system according to a third embodiment of the present invention.
Fig. 8 is an explanatory diagram showing an example of the configuration of a voltage control unit included in a power conditioning system shown in Fig. 7.
Fig. 9 is a flowchart showing an example of program processing executed at the voltage control stage of a voltage control unit according to a fourth embodiment of the present invention.
Fig. 10 is an explanatory diagram showing an example of the configuration of a photovoltaic power generation system according to a fifth embodiment of the present invention.

Description of Embodiments

In the following description of embodiments, although there are some cases where plural sections or plural embodiments are separately described for convenience as needed, those sections or embodiments are not completely unrelated to each other, and one is a modified example, a detail, a supplementarily explanatory example of a part or the whole of others or the like except as otherwise clearly specified.

In addition, in the following embodiments, in the case where the number and the like of an element (also including a number, a numerical value, an amount, a range, and the like) are referred to, the number of the element is not limited to a specific number and can be larger or smaller than the specific number except as otherwise clearly specified, clearly limited to a specific number in principle, and the like.

Furthermore, in the following embodiments, it is needless to mention that the constituent elements of the embodiments (also including the elemental step and the like) are not necessarily indispensable except as otherwise clearly specified, considered to be clearly indispensable in principle, and the like.

In the same manner, in the following embodiments, in the case where the shapes, positions, or the like of the constituent elements of the embodiments are referred to, it will be assumed that the shapes or the like of the constituent elements include the shapes and the like effectively approximate or similar to the shapes and the like of the constituent elements except as otherwise clearly specified, clearly considered not to be so in principle, and the like. The same holds true for the abovementioned numerical value and range.

In addition, in all the drawings used for explaining the embodiments, the same reference signs are given to the same materials in principle, and a repeated explanation thereof will be omitted.

First Embodiment

(Configuration Example of Photovoltaic Power Generation System and Operation Example Thereof)

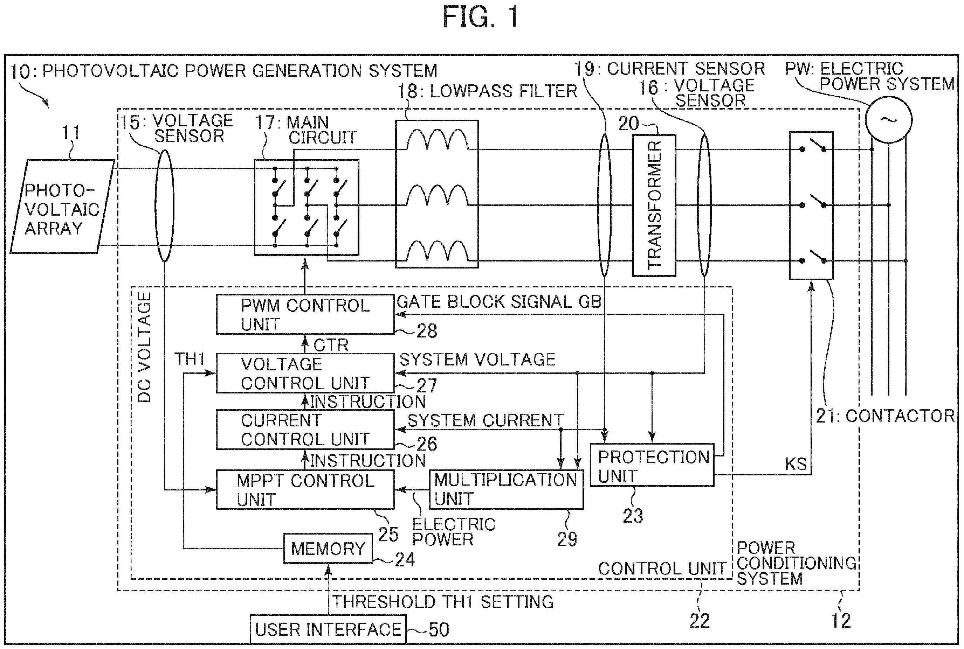

Fig. 1 is an explanatory diagram showing an example of the configuration of a photovoltaic power generation system 10 according to a first embodiment of the present invention.

The photovoltaic power generation system 10 includes a photovoltaic array 11, a power conditioning system 12, and a user interface 50 as shown in Fig. 1. The photovoltaic array 11 includes plural photovoltaic panels formed by plural arrayed photovoltaic cells. The photovoltaic cells convert light energy emitted by the sun into electric power.

The power conditioning system 12, which is an electric power conversion control apparatus, is connected between the photovoltaic array 11 and an electric power system PW with a three-phase voltage 200 V provided by an electric power company or the like. The power conditioning system 12 converts a DC voltage generated by the photovoltaic array 11 into an AC current, and at the same time, makes the voltage and frequency of the AC voltage equal to those of the electric power system PW.

The power conditioning system 12 includes: voltage sensors 15 and 16; a main circuit 17; a lowpass filter 18; a current sensor 19; a transformer 20; a contactor 21; and a control unit 22.

The voltage sensor 15 detects the voltage level of the DC voltage generated by the photovoltaic array 11. The main circuit 17, which forms a main circuit unit, is an inverter circuit including semiconductor elements such as IGBTs (Insulated Gate Bipolar Transistors) and converts a DC voltage generated by the photovoltaic array 11 into an AC voltage on the basis of a PWM (Pulse Width Modulation) signal output from the control unit 22.

The lowpass filter 18 is a filter for eliminating harmonic components. The current sensor 19 detects the value of a current flowing through the main circuit 17. The transformer 20 transforms an AC voltage generated by the main circuit 17 into, for example, a voltage of about 200 V.

The voltage sensor 16 detects the voltage value of the electric power system PW. The contactor 21 is connected between the transformer 20 and the electric power system PW with a three-phase voltage 200 V provided by the electric power company, and breaks a current conduction path therebetween on the basis of a control signal issued by the control unit 22. The user interface 50 is an interface used for inputting and displaying data and the like.

The DC voltage generated by the photovoltaic array 11 is pulse-width modulated by the semiconductor elements of the main circuit 17 on the basis of a PWM signal output from the control unit 22. Subsequently, the pulse-width modulated voltage becomes an AC voltage of about 50 Hz or 50 Hz after the harmonic components of the pulse-width modulated voltage are eliminated by the lowpass filter 18. An AC voltage output from the lowpass filter 18 is transformed by the transformer 20. The transformed AC voltage is output to the electric power system PW via the contactor 21.

The control unit 22 controls the main circuit 17 so that the AC voltage output from the power conditioning system 12 becomes optimal. The control unit 22 includes: a protection unit 23; an MPPT control unit 25; a current control unit 26; a voltage control unit 27; a PWM control unit 28; and a multiplication unit 29.

The MPPT control unit 25 optimizes the operation condition of the photovoltaic array 11 on the basis of the voltage value detected by the voltage sensor 15 and a multiplication result obtained through multiplication by the multiplication unit 29, that is to say, an electric power value. The multiplication unit 29 multiplies the voltage value detected by the voltage sensor 16 with the current value detected by the current sensor 19, and outputs the multiplication result to the MPPT control unit 25.

The optimization executed by the MPPT control unit 25 optimizes the operation condition (DC voltage) of the photovoltaic array 11 through tracking the optimal operation point that varies in accordance with the changes of climate conditions and the like using, for example, a maximum power point tracking (MPPT) scheme.

The current control unit 26 transmits electric power output from the power conditioning system 12 to the electric power system PW. The current control unit 26 makes the value of the current flowing through the electric power system PW coincide with an instruction value output from the MPPT control unit 25 using feedback control on the basis of the instruction value and the current value detected by the current sensor 19, and generates a current control signal.

The voltage control unit 27 makes the electric power output from the power conditioning system 12 conform to the specifications of the electric power system PW. In other words, the voltage control unit 27 outputs a voltage compensation signal CTR to the PWM control unit 28, and executes control for making the voltage level and frequency of the AC voltage output from the power conditioning system 12 coincide with those of the electric power system PW on the basis of the current control signal issued by the current control unit 26. This voltage control unit 27 is required to promptly make the output voltage of the main circuit 17 coincide with the voltage of the electric power system, so that feedforward control is adopted.

The PWM control unit 28 generates a PWM signal on the basis of the voltage compensation signal CTR output from the voltage control unit 27, and outputs the PWM signal to the main circuit 17. On receiving a gate block signal GB from the protection unit 23, the PWM control unit 28 outputs an OFF signal. The OFF signal is a signal output to the main circuit 17, and the semiconductor switches of the main circuit 17 are compulsorily turned off by this OFF signal, and the main circuit stops its operation.

The protection unit 23 monitors the voltage of the electric power system PW and the current flowing through the main circuit 17 respectively on the basis of the voltage value detected by the voltage sensor 16 and the current value detected by the current sensor 19, and if these detected values exceed their prescribed values, the protection unit 23 outputs the gate block signal GB and a parallel-off signal KS respectively.

The parallel-off signal KS is a signal output to the contactor 21. When the parallel-off signal KS is input into the contactor 21, the contactor 21 breaks the current conduction path and separates the power conditioning system 12 from the electric system PW.

Different priorities are assigned to control stages executed by the MPPT control unit 25, the current control unit 26, the voltage control unit 27, and the PWM control unit 28 respectively, and a control stage with the highest priority is control executed at the PWM control stage of the PWM control unit 28.

Control executed at the voltage control stage by the voltage control unit 27 is located under the PWM control stage, and control executed at the current control stage by the current control unit 26 is located under the voltage control stage. Lastly, a control stage with the lowest priority is the MPPT control stage of the MPPT control unit 25.

The memory 24 includes nonvolatile semiconductor memories such as, for example, flash memories, and the memory 24 is a memory that stores data and the like such as an after-mentioned threshold TH1 input via the user interface 50. The threshold TH1 is a first threshold.

Furthermore, although the photovoltaic power generation system 10 is configured to include the user interface 50 in Fig. 1, the user interface 50 can be installed independently of the photovoltaic power generation system 10.

In the above case, the user interface can be fabricated by a personal computer or the like. The personal computer is externally connected, for example, to the power conditioning system 12. The personal computer and the power conditioning system 12 are connected to each other using a communication technology such as, for example, PLC (Power Line Communications).

(Threshold Setting Example)

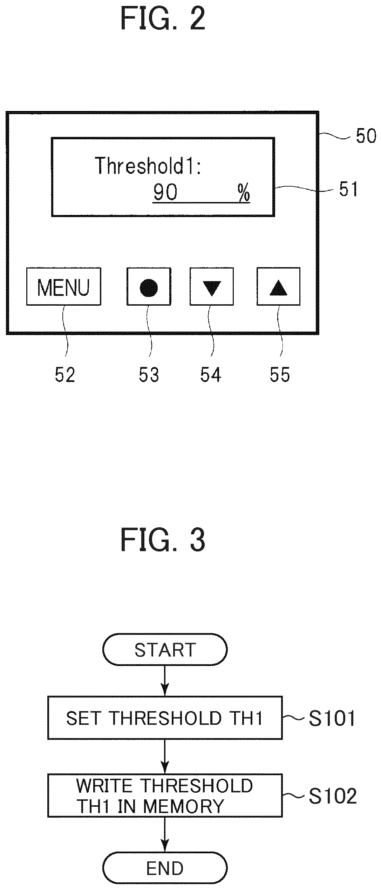

Next, threshold TH1 setting processing executed using the user interface 50 will be explained with reference to Fig. 2 and Fig. 3.

Fig. 2 is an explanatory diagram showing an example of the user interface 50 shown in Fig. 1. Fig. 3 is a flowchart showing an example of threshold TH1 setting processing executed using the user interface 50 shown in Fig. 1.

The user interface 50 includes a window 51 on the upper part of which various pieces of information are displayed as shown in Fig. 2. On the lower part of the window 51, a menu button 52, a decision button 53, a downward shift button 54, and an upward shift button 55 are provided from left to right in Fig. 2.

The menu button 52 is a button used for selecting various setting items. The decision button 53 is a button used for deciding a setting item selected by the menu button 52. If a menu for setting the threshold TH1 is selected, for example, the downward shift button 54 is used for reducing the numerical value of the threshold TH1 displayed on the window 51. The upward shift button 55 is used for increasing the numerical value of the threshold TH1 displayed on the window 51. In order to cyclically shift the numerical value of the threshold TH1, one of the downward shift button 54 and the upward shift button 55 has only to be continuously pushed.

In Fig. 3, it will be assumed that the menu for setting the threshold TH1 is selected using the menu button 52 in Fig. 2 first. With this, a threshold setting screen is displayed on the window 51 of the user interface 50 as shown in Fig. 2.

A user changes the numerical value of the threshold TH1 displayed on the window 51 using the downward shift button 54 or the upward shift button 55 until the numerical value becomes a desirable value, and then pushes the decision button 53 to set the threshold TH1 (at step S101).

After the threshold TH1 is set using the decision button 53, the control unit 22 shown in Fig. 1 stores the set threshold TH1 in the memory 24 included in the control unit 22 itself (at step S102). With that, the threshold TH1 setting processing is finished.

In the above case, the numerical value shown on the window 51 in Fig. 2 shows an example of the percentage of the threshold TH1 relative to the voltage of the electric power system PW. In this case, a numerical value input by the user using the user interface 50 is squared to make the dimension of the squared numerical value coincide with the dimension of an abrupt change amount. In addition, alternatively a direct abrupt change amount or a ratio to the voltage of the electric power system PW can be adopted as the threshold TH1.

(Configuration Example of Voltage Control Unit)

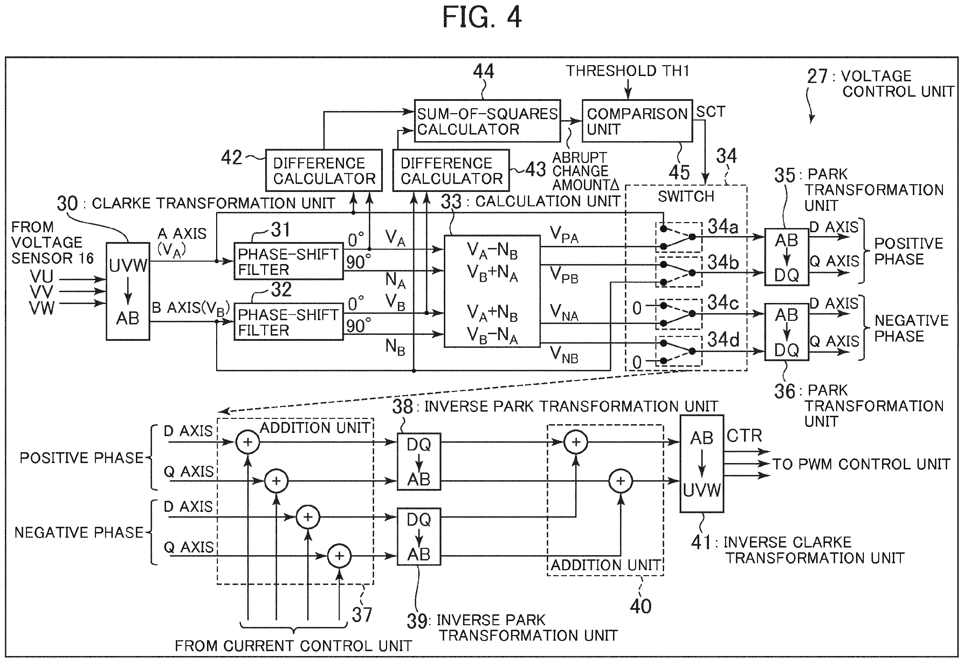

Fig. 4 is an explanatory diagram showing an example of the configuration of the voltage control unit 27 included in the control unit 22 of the power conditioning system 12 shown in Fig. 1.

As shown in Fig. 4, the voltage control unit 27 includes: a Clarke transformation unit 30; phase-shift filters 31 and 32; a calculation unit 33; a switch 34; Park transformation units 35 and 36; an addition unit 37; inverse Park transformation units 38 and 39; an addition unit 40; an inverse Clarke transformation unit 41; difference calculators 42 and 43; a sum-of-squares calculator 44; and a comparison unit 45.

A three-phase voltage (a voltage VU, a voltage VV, and a voltage VW) of the electric power system PW detected by the voltage sensor 16 shown in Fig. 1 is input into the Clarke transformation unit 30 respectively. The Clarke transformation unit 30 executes Clarke transformation on the three-phase voltage (three axes) of the electric power system PW obtained by the voltage sensor 16 to transform the three-phase voltage into a two-phase voltage comprised of the A axis (voltage $V_A$) and the B axis (voltage $V_B$).

After the two voltages of the two-phase voltage on which Clarke transformation is exercised are passed through the phase-shift filters 31 and 32, which are separation filters, respectively, each voltage is separated into voltages the phases of which are shifted 90° from each other (voltage $V_A$ and voltage $jV_A$, voltage $V_B$ and voltage $jV_B$), and these voltages are input into the calculation unit 33.

The calculation unit 33 extracts a positive-phase-sequence component and a negative-phase-sequence component from the input two voltages, the phases of which are shifted from each other, on the A axis, and, at the same time, extracts a positive-phase-sequence component and a negative-phase-sequence component from the input two voltages, the phases of which are shifted from each other, on the B axis. The respective extracted components are input into the Park transformation units 35 and 36 as detected voltages via the switch 34 respectively.

The Park transformation unit 35 transforms the input detected voltages into positive-phase-sequence voltages on the D axis and Q axis using Park transformation. The Park transformation unit 36 transforms the input detected voltages into negative-phase-sequence voltages on the D axis and Q axis using Park transformation. The addition unit 37 adds current control signals output from the current control unit 26 shown in Fig. 1 to the positive-phase-sequence voltages on the D axis and Q axis, on which Park transformation is executed by the Park transformation unit 35, and the negative-phase-sequence voltages on the D axis and Q axis, on which Park transformation is executed by the Park transformation unit 36, respectively, and these voltages are output to the inverse Park transformation units 38 and 39 respectively.

The inverse Park transformation unit 38 executes inverse Park transformation on the input positive-phase-sequence voltages on the D axis and the Q axis into positive-phase-sequence voltages on the A axis and the B axis. The inverse Park transformation unit 39 executes inverse Park transformation on the input negative-phase-sequence voltages on the D axis and the Q axis into negative-phase-sequence voltages on the A axis and the B axis.

The addition unit 40 adds the positive-phase voltage on the A axis to the negative-phase voltage on the A axis, on which inverse Park transformation is executed, and further adds the positive-phase voltage on the B axis to the negative-phase voltage on the B axis, on which inverse Park transformation is executed, and then the addition unit 40 outputs two voltages obtained on the A axis and B axis to the inverse Clarke transformation unit 41.

The inverse Clarke transformation unit 41 transforms a two-phase voltage comprised of the voltages on the A axis and B axis into a three-phase voltage comprised of three voltages on three axes again using inverse Clarke transformation, and outputs the three-phase voltage to the PWM control unit 28 shown in Fig. 1 as a voltage compensation signal CTR. With the use of this separation/extraction of positive-phase-sequence voltages and negative-phase-sequence voltages, even when a system becomes in an unbalanced state owing to a fault, compensation control can be executed on the system.

The difference calculator 42 calculates the difference between an input voltage $V_A$ on the A axis input into the phase-shift filter 31 and a 0° phase-shifted output voltage $V_A$ output from the phase-shift filter 31. The difference calculator 43 calculates the difference between an input voltage $V_B$ on the B axis input into the phase-shift filter 32 and a 0° phase-shifted output voltage $V_B$ output from the phase-shift filter 32.

The sum-of-squares calculator 44 squares each of the difference values calculated by the difference calculators 42 and 43, and adds these squared values to output the sum as an abrupt change amount. The comparison unit 45, which is a first comparison unit, compares the abrupt change amount calculated by the sum-of-squares calculator 44 with the threshold TH1, and outputs the comparison result to the switch 34 as a switch control signal SCT.

These difference calculation units 42 and 43, sum-of-squares calculator 44, comparison unit 45, and switch 34 form an excess current suppression unit that suppresses an excess current flowing through the lowpass filter 18, and executes excess current control that makes the excess current bypass the phase-shift filters. Furthermore, the Park transformation units 35 and 36, the addition unit 37, the inverse Park transformation units 38 and 39, the addition unit 40, and the inverse Clarke transformation unit 41 form a compensation signal generation unit.

(Excess Current Control Using Voltage Control Unit)

Next, excess current control that controls an excess current flowing through the lowpass filter 18 executed by the control unit 22 of the power conditioning system 12 will be explained.

First, the response characteristics of the phase-shift filters 31 and 32 will be explained.

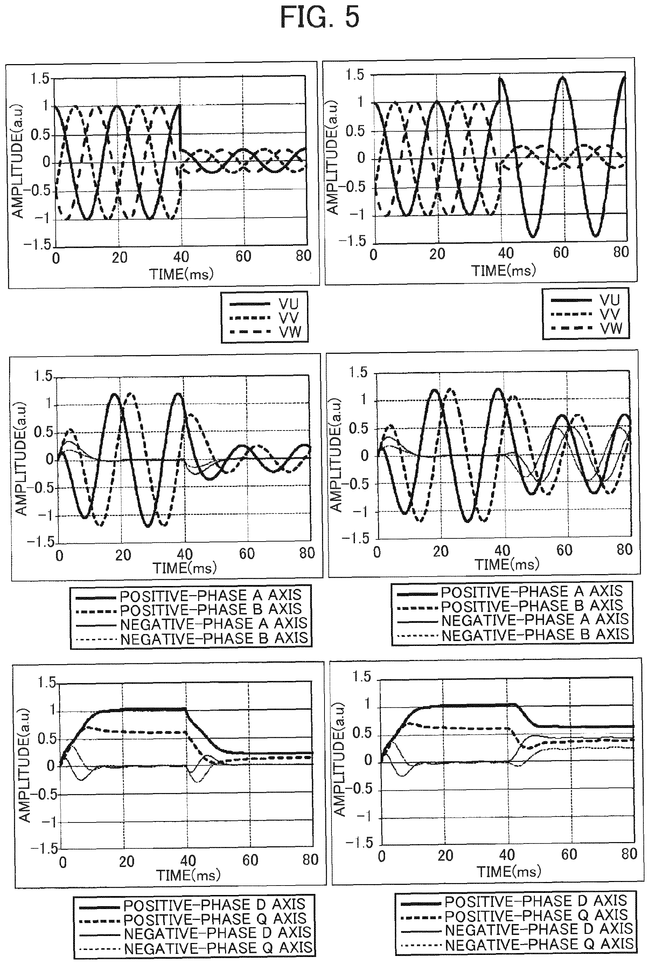

Fig. 5 is an explanatory diagram showing examples of waveforms on the respective axes to the D axis/Q axis in the voltage control unit 27 shown in Fig. 4.

In Fig. 5, left-hand graphs show voltages in the case where the three-phase voltage of the electric power system PW is reduced one step in a three-phase balanced state (after the time when about 40 ms elapsed from the beginning as shown in Fig. 5), and right-hand graphs show voltages in the case where the three-phase voltage of the electric power system PW is reduced in a three-phase unbalanced state (after the time when about 40 ms elapsed from the beginning as shown in Fig. 5). In addition, from top down in Fig. 5, the waveforms of the three-phase voltages of the electric power system PW (each including the voltages VU, VV, and VW) detected by the voltage sensor 16, the waveforms of two-phase voltages (each including the positive-phase-sequence voltage on the A axis, the positive-phase-sequence voltage on the B axis, the negative-phase-sequence voltage on the A axis, and the negative phase-sequence voltage on the B axis) before Park transformation, and the waveforms of two-phase voltages (each including the positive-phase-sequence voltage on the D axis, the positive-phase-sequence voltage on the Q axis, the negative-phase-sequence voltage on the D axis, and the negative phase-sequence voltage on the Q axis) after Park transformation are respectively shown.

In Fig. 5, as is clear from the waveforms after the three-phase voltage is reduced, the phase-shift filters 31 and 32 cannot follow the abrupt voltage change that occurs in the electric power system PW. Furthermore, a time period required for the outputs of the phase-shift filters 31 and 32 to converge from an abrupt voltage change is several ms to about ten ms, so that an excess current flows through the lowpass filter 18 in Fig. 1 during this time period.

Particularly, because the outputs of the phase-shift filters 31 and 32 do not change at a moment when the voltage of the electric power system PW is reduced, the reduced amount of the voltage is applied to the lowpass filter. As a result, an excess current given by the next Expression flows through the lowpass filter.

[Expression 1]

$$\Delta I = \Delta V / L * \Delta T$$

Here, $\Delta V$ is the reduced amount of the voltage, L is an inductance of the lowpass filter, and $\Delta T$ is a control cycle. The excess current flowing through the lowpass filter 18 exceeds the rated current of the main circuit 17, a parallel-off function works. To put it concretely, the protection unit 23 outputs a parallel-off signal KS, and the contactor 21 breaks the current conduction path on the basis of the parallel-off signal.

Because the contactor 21 includes, for example, mechanical switches, it requires, for example, about 1 s for a current conduction path to be brought into a conductive state from a state in which the current conduction path is broken owing to the parallel-off signal KS. Therefore, there is a possibility that an instantaneous blackout may occur when the parallel-off function works, which leads to a serious adverse effect on the quality of the electric power system PW. In order to secure the high power quality of the electric power system PW, it is desirable to prevent the breaking of the current conduction path executed by the parallel-off function from frequently occurring.

Therefore, in the voltage control unit 27, in order to suppress this excess current, when the voltage of the electric power system PW becomes smaller than a certain setting value, a control operation is executed so that the excess current bypasses the phase-shift filters 31 and 32 using the difference calculators 42 and 43, the sum-of-squares calculator 44, and the comparison unit 45.

In order to utilize the fact that the outputs of the 0° phase-shift filters 31 and 32 are not equal to the inputs of the 0° phase-shift filters 31 and 32 respectively as long as the 90° phase-shift filters 31 and 32 do not become convergent, the difference calculator 42 calculates the difference between the input and the output on the A axis, and the difference calculator 43 calculates the difference between the input and the output on the B axis.

The sum-of-squares calculator 44 squares these difference values respectively, adds these squared values, and defines the value of the sum as an abrupt change amount $\Delta$. A voltage is obtained by calculating the square root of the abrupt change amount $\Delta$. The comparison unit 45 compares the abrupt change amount (voltage) calculated by the sum-of-squares calculator 44 with a threshold TH1 stored in advance in the memory 24, and outputs the comparison result to the switch 34 as a switch control signal SCT.

Here, the threshold TH1 included in the comparison unit 45 is stored in advance in the memory 24 shown in Fig. 1. The threshold TH1 is input using, for example, the user interface 50 shown in Fig. 1. The threshold TH1 input from the user interface 50 is stored in the memory 24.

The switch 34 switches connection destinations on the basis of the input switch control signal SCT. The switch 34 includes, for example, four selectors 34a to 34d. The selector 34a selects one of a positive-phase-sequence component voltage $V_{PA}$ output from the calculation unit 33 and an voltage $V_A$ on the A axis output from the Clarke transformation unit 30 on the basis of the switch control signal SCT, and outputs the selected voltage to the Park transformation unit 35 as a detected voltage.

The selector 34b selects one of a positive-phase-sequence component voltage $V_{PB}$ output from the calculation unit 33 and a voltage $V_B$ on the B axis output from the Clarke transformation unit 30 on the basis of the switch control signal SCT, and outputs the selected voltage to the Park transformation unit 35.

The selector 34c selects one of a negative-phase-sequence component voltage $V_{NA}$ output from the calculation unit 33 and a voltage '0' on the basis of the switch control signal SCT, and outputs the selected voltage. The selector 34d selects one of a negative-phase-sequence component voltage $V_{NB}$ output from the calculation unit 33 and a voltage '0' on the basis of the switch control signal SCT, and outputs the selected voltage.

Here, conduction routes formed by the selectors 34a to 34d shown in Fig. 4 show routes in the case of the abrupt change amount $\Delta$ being smaller than the threshold TH1. In these routes shown in Fig. 4, the outputs of the phase-shift filters 31 and 32 are input into the Park transform units 35 and 36 via the calculation unit 33 and the selectors 34a to 34d respectively.

In addition, in the case of the abrupt change amount being larger than the threshold TH1, the conduction routes become routes shown by dotted lines in Fig. 4, and the A axis (voltage $V_A$) and the B axis (voltage $V_B$) are input into the Park transform unit 35 as they are via the selectors 34a to 34b without passing through the phase-shift filters 31 and 32.

Although the abrupt change amount calculated by the sum-of-squares calculator 44 is a value dependent on the degrees of the convergences of the phase-shift filters 31 and 32, the abrupt change amount includes information about the ratio of the reduced amount of the voltage of the electric power system PW at the time when the voltage of the electric power system PW abruptly changes.

Hereinafter, let's represent the amplitude of the three-phase voltage of the system before and after an abrupt voltage change in a balanced state as V and V', and an abrupt change amount $\Delta 0$ will be calculated. The three phase voltage components (U, V, W) are given by Expression 2.

[Expression 2]

$$\begin{bmatrix} VU \\ VV \\ VW \end{bmatrix} = \begin{bmatrix} V\cos(\omega t + \varphi) \\ V\cos(\omega t - 2/3\pi + \varphi) \\ V\cos(\omega t + 2/3\pi + \varphi) \end{bmatrix}$$

In the above Expression, $\omega$ is the angular frequency of the system. $\phi$ is referred to as an input angle, and represents an angle when the voltage abruptly changes. The voltages on the A axis and on the B axis after Clarke transformation are given by Expression 3.

[Expression 3]

$$\begin{bmatrix} V_A \\ V_B \end{bmatrix} = \sqrt{2/3} \begin{bmatrix} 1 & -1/2 & -1/2 \\ 0 & \sqrt{3}/2 & -\sqrt{3}/2 \end{bmatrix} * \begin{bmatrix} VU \\ VV \\ VW \end{bmatrix} = \begin{bmatrix} V\cos(\omega t + \varphi) \\ V\sin(\omega t + \varphi) \end{bmatrix}$$

Just after the voltage abruptly changes, the inputs into the phase-shift filters 31 and 32 are in the same states as states before the abrupt voltage change respectively because the outputs of the phase-shift filters 31 and 32 cannot follow the abrupt voltage change. Furthermore, assuming that a sampling interval before and after the abrupt voltage change is adequately small in comparison with the AC cycle, $\omega t$ can be adopted for the same voltages before and after the abrupt voltage change.

The difference value $\Delta V_A$ of the voltage on the A axis and the difference value $\Delta V_B$ of the voltage on the B axis can be represented as follows.

[Expression 4]

$$\begin{bmatrix} \Delta V_A \\ \Delta V_B \end{bmatrix} = \begin{bmatrix} V'_A \\ V_{B'} \end{bmatrix} - \begin{bmatrix} V_A \\ V_B \end{bmatrix} = \begin{bmatrix} (V'-V)\cos(\omega t + \varphi) \\ (V'-V)\sin(\omega t + \varphi) \end{bmatrix}$$

An abrupt change amount $\Delta$ is given by Expression 5 because it is obtained by squaring the difference values $\Delta V_A$ and $\Delta V_B$ and adding these squared values.

[Expression 5]

$$\Delta = (\Delta V_A)^2 + (\Delta V_B)^2 = (V'-V)^2$$

This value is determined by only the ratio of the abrupt voltage change and is not dependent on the time when the fault occurs (the input angle $\varphi$). Therefore the ratio of the abrupt voltage change of the electric power system PW can be accurately calculated from the abrupt change amount $\Delta_0$.

Next, let's consider a case where the electric power system PW becomes in an unbalanced state when the voltage of the electric power system PW abruptly changes.

Although the three phase voltage components are represented by only positive-phase-sequence components as is the case with Expression 2 before the abrupt voltage change, the three phase voltage components are represented by the combinations of positive-phase-sequence components and negative-phase-sequence components as shown below. $\varphi_N$ is an input angle for the negative-phase-sequence components and is dependent on the time when the abrupt voltage change occurs and the unbalanced state.

[Expression 6]

$$\begin{bmatrix} V'U \\ V'V \\ V'W \end{bmatrix} = \begin{bmatrix} V'_P \cos(\omega t + \varphi_P) \\ V'_P \cos(\omega t - 2/3\pi + \varphi_P) \\ V'_P \cos(\omega t + 2/3\pi + \varphi_P) \end{bmatrix} + \begin{bmatrix} V'_N \cos(-\omega t + \varphi_N) \\ V'_N \cos(-\omega t - 2/3\pi + \varphi_N) \\ V'_N \cos(-\omega t + 2/3\pi + \varphi_N) \end{bmatrix}$$

In a similar way, three phase voltage components on the A axis and on the B axis are given below.

[Expression 7]

$$\begin{bmatrix} V'_A \\ V'_B \end{bmatrix} = \sqrt{2/3} \begin{bmatrix} 1 & -1/2 & -1/2 \\ 0 & \sqrt{3}/2 & -\sqrt{3}/2 \end{bmatrix} * \begin{bmatrix} V'U \\ V'V \\ V'W \end{bmatrix} = \begin{bmatrix} V'_P \cos(\omega t + \varphi_P) \\ V'_P \sin(\omega t + \varphi_P) \end{bmatrix} + \begin{bmatrix} V'_N \cos(\omega t + \varphi_{N\backslash}) \\ V'_N \sin(\omega t + \varphi_N) \end{bmatrix}$$

The difference value $\Delta V_A$ on the A axis and the difference value $\Delta V_B$ on the B axis can be obtained by substituting Expression 3 and Expression 7 into Expression 4. Assuming that the timing of the abrupt voltage change is represented by an input angle $\varphi_P$, the time when the voltage abruptly changes can be set as t=0. In the case where the time of the abrupt voltage change is different, you have only to change $\varphi_P$. By substituting $\omega t=0$ to the obtained abrupt change amount $\Delta$, Expression 8 is given.

[Expression 8]

$$\Delta_0 = (\Delta V_A |_{t=0})^2 + (\Delta V_B |_{t=0})^2 = (V'_P - V)^2 + V'_N{}^2 - (V'_P - V)V'_N \cos(2(\varphi_\Pi - \varphi_N))$$

In the above Expression 8, there remains a term regarding the input angles, this term represents a relative value between the positive-phase-sequence voltage and the negative-phase-sequence voltage, and is a value not dependent on the input time but on the unbalanced state. Therefore even if the electric power system PW becomes in an unbalanced state when the voltage is reduced, the state of the abrupt change of the voltage can be accurately extracted from the abrupt change amount.

In addition, the threshold TH1 (Δ1) used for determining whether to make an excess current flow through the phase-shift filters 31 and 32 or bypass the phase-shift filters 31 and 32 can be set as a value that is smaller than the square of a voltage difference which makes an excess current given by Expression 1 equal to the protection current value of the main circuit 17 or smaller, and for example, the threshold TH1 (Δ1) is represented by Expression (9).

[Expression 9]

$$\Delta 1 < (\Delta V)^2 \text{ where } \Delta V = IP * L / \Delta T$$

In Expression 9, IP is the protection current value of the main circuit 17. As a small value as possible should be assigned to the threshold TH1 although the small value should be assigned depending on a type of the implemented power conditioning system 12, and for example, it is suitable for the threshold TH1 should to be set as about 0.01 a.u. of the abrupt change amount, that is to say, as about 10 % reduced value of the voltage of the electric power system PW.

If a small value is carelessly assigned to the threshold, the bypass operation, that is to say, the current control operation is easily raised even if the voltage of the electric power system PW slightly changes. However, because an excess current flowing through the lowpass filter 18 owing to a case of the phase-shift filters 31 and 32 not being bypassed is larger than an unbalanced current being generated owing to a case of the phase-shift filters 31 and 32 being bypassed, a damage to the main circuit and the possibility of a parallel-off operation being raised become smaller in the latter case.

Next, how the above-described excess current control, in which the phase-shift filters 31 and 32 are bypasses using the difference calculators 42 and 43, the sum-of-squares calculator 44, and the comparator 45, exerts an influence on the control over the power conditioning system 12 will be explained.

A positive-phase-sequence voltage and a negative-phase-sequence voltage which are accurately extracted by the phase-shift filters 31 and 32 are input into the Park transformation unit 35 as they are during a time period during which the phase-shift filters 31 and 32 are not converged yet although the time period is only several ms.

In this case, although the positive-phase-sequence components are mapped on the D axis and the Q axis, if the negative-phase-sequence components exist, a ripple voltage the frequency of which is double the frequency of the electric power system PW is generated by Park transformation executed by the Park transformation unit 35.

However, because this phenomenon happens even in a control in which a positive-phase-sequence voltage and a negative-phase-sequence voltage are not extracted, it does not necessarily means that the introduction of this excess current control increases the generation frequency of excess currents. Furthermore, even if the excess current control malfunctions, the excess current control only shifts into control in which the positive-phase-sequence and the negative-phase-sequence voltages are not extracted, so the malfunction of the excess current control does not leads to the increase of the excess current. After several ms when the phase-filters have become in convergent states, accurate unbalance compensation can be executed again.

As described above, the abrupt change amount calculated by the sum-of-squares calculator 44 can accurately reflect the abrupt change amount of the voltage of the electric power system PW regardless of whether the voltage of the electric power system PW is unbalanced or not.

If this abrupt change amount is larger than the threshold TH1, the voltages $V_A$ and $V_B$ on the two axes, which are obtained by the Clarke transformation unit 30's transforming, are input into the Park transformation unit 35 without the voltages $V_A$ and $V_B$'s passing through the phase-shift filters 31 and 32.

Therefore, even if the voltage of the electric power system PW largely and abruptly changes, the delays of the responses of the phase-shift filters are vanished, so that the generation time of the voltage compensation signal CTR can be shortened. With this, the tracking ability of the voltage control unit for the abrupt voltage change of the electric power system PW can be improved, and an excess current can be prevented from flowing through the lowpass filter 18 and the like.

In addition, because the excess current can be prevented from flowing through the lowpass filter 18, it becomes unnecessary to increase the inductance components of the lowpass filter 18, which leads to the cost reduction of the power conditioning system 12.

Furthermore, because the number of breakings of the current conduction path executed by the parallel-off function can be reduced, the quality of the electric power of the electric power system PW can be improved.

Second Embodiment

(Overview)

Although the voltage control unit 27 shown in Fig. 1 is configured with hardware in the above-described first embodiment, the function of the voltage control unit 27 can also be realized with program processing. Therefore, in this second embodiment, control processing in a case of the function of a voltage control unit 27 being realized with a program will be explained.

(Configuration of Control Unit)

In addition, it will be assumed that other functions in a control unit 22, that is to say, the functions of an MPPT control unit 25, a current control unit 26, and a PWM control unit 28 are also executed by programs.
In this case, the control unit 22 includes microcomputers and the like, and the program that realizes the function of the voltage control unit 27 is stored, for example, in the memory 24 shown in Fig. 1. In a similar way, the programs that realize the functions of the MPPT control unit 25, the current control unit 26, and the PWM control unit 28 are also stored, for example, in the memory 24.
The configuration of a photovoltaic power generation system 10 of this second embodiment is similar to that of the above-described first embodiment shown in Fig. 1, and they are different from each other in that the functions of the abovementioned voltage control unit 27 and other units are realized with software processing using programs in the second embodiment.
In the above description, although the functions of the MPPT control unit 25, the current control unit 26, the voltage control unit 27, and the PWM control unit 28 of the control unit 22 are assumed to be configured with software processing, it is also conceivable that only the function of the voltage control unit 27 of the control unit 22 is configured with software processing using programs.

(Processing Example at Voltage Control Stage)

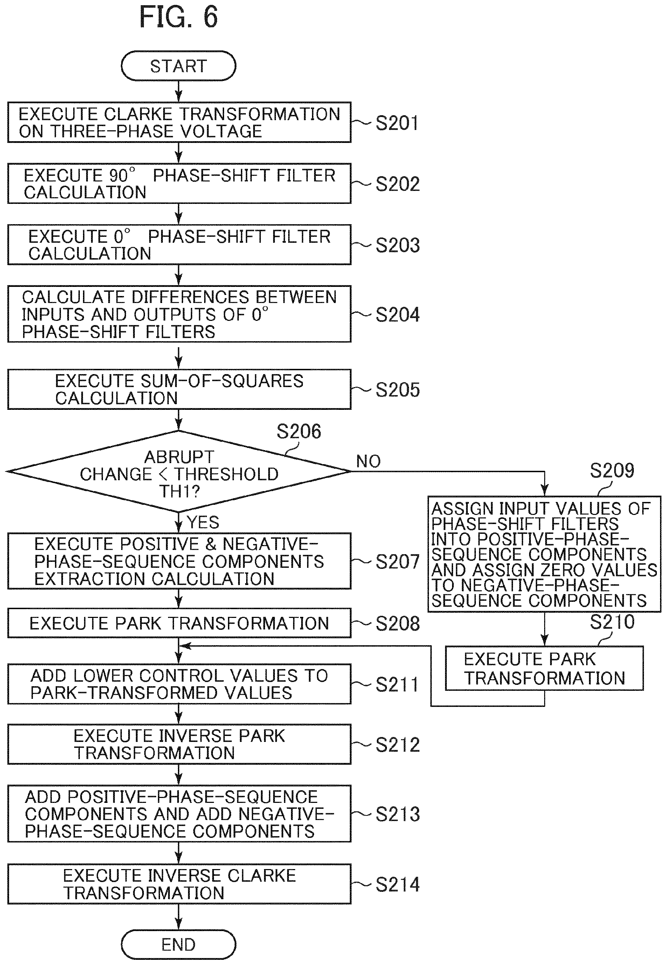

Hereinafter, a case where the control unit 22 deals with the voltage control function of the voltage control unit 27 shown in Fig. 1 using a program will be explained with reference to Fig. 1 and Fig. 6.
Fig. 6 is a flowchart showing an example of program processing executed at the voltage control stage of the voltage control unit 26 according to this second embodiment. Furthermore, it is assumed that the threshold TH1 has been already stored in the memory 24 in Fig. 1 in advance through processing shown in Fig. 3.
When the operation of the photovoltaic power generation system 10 is started, the three-phase voltage of the electric power system PW, which is detected by a voltage sensor 16, is input into the control unit 22. The three-phase voltage detected by the voltage sensor 16 is converted into a digital signal by, for example, an A/D converter, and the digital signal is input into the control unit 22.
In the following description, the program that executes the voltage control stage is called up periodically, for example, every about 100 $\mu$seconds by an interrupt action and the like from the main program of the power conditioning system 12, and the program executes processing shown in Fig. 6.
First, the three voltage components of the input three-phase voltage are multiplied with suitable gains respectively, and Clarke transformation is performed on these components (at step S201). Next, pieces of phase-filter calculation processing are performed (at steps S202 and S203). In this case, the processing executed in step S202 in which the phases of the input voltages are shifted by 90° is not limited to specific processing. For example, the technology described in Nonpatent Literature 2 can be applied to the processing executed in step S202.
In addition, in 0° phase-shift calculation processing, the input three-phase voltage is output not as it is, and it is desirable that the frequency characteristic of the 0° phase-shift output should be equal to that of the output of 90° phase-shift filter calculation as much as possible. Therefore, in the 0° phase-shift filter calculation at step S203, for example, the output of the 0° phase-shift filter calculation is obtained by integrating the output after the 90° phase-shift filter calculation and multiplying the value obtained by the integration with a gain proportional to the frequency.
After the 0° phase-shift filter calculation is finished, the outputs of the 90° phase-shift are subtracted from the inputs into the 0° phase-shift respectively (at step S204), and the results of the subtractions are squared and the squared values are added (at step S205). Afterward, the threshold TH1 stored in advance in the memory 24 is compared with the result of the sum-of-squares calculation (at step S206).
If the calculation result of the sum-of-squares calculation is smaller than the threshold TH1, positive and negative-phase-sequence extraction calculation processing is executed on the phase-shift-filter processed outputs (at step S207). This positive and negative-phase-sequence extraction calculation processing is the same as the processing executed by the calculation unit 33 of the first embodiment shown in Fig. 4, and positive and negative components on the A axis and positive and negative components on the B axis are separately extracted.

Subsequently, Park transformation is executed on the positive-phase-sequence components positive-phasedly and on the negative-phase-sequence components negative-phasedly (at step S208), and a D axis component and a Q axis component regarding the positive-phase-sequence are obtained and a D axis component and a Q axis component regarding the negative-phase-sequence are obtained.

If the calculation result of the sum-of-squares calculation is larger than the threshold TH1 in the processing at step S206, a D axis component and a Q axis component are obtained by executing Park transformation only on the 0° phase-shift voltages obtained in the processing at step S203 (at steps S209 and S210). '0' are assigned to the negative-phase-sequence components in the processing at step S209, and a calculation regarding the negative-phase-sequence components is not executed hereinafter.

Afterward, current control signals regarding the D axis and current control signals regarding the Q axis, which are calculated by the current control unit 26 that is a lower control stage, are added to the D axis components and the Q axis components respectively (at step S211), and reverse Park transformation is executed on the results of the addition (at step S212) . Reverse park transformation is executed on the components regarding the positive-phase-sequence positive-phasedly and the components regarding the negative-phase-sequence negative-phasedly respectively, and the components regarding the positive-phase-sequence and the components regarding the negative-phase-sequence are brought back on the A axis and on the B axis respectively.

Subsequently, a positive-phase-sequence component and a negative-phase-sequence component for each of the axes are added (at step S213), and inverse Clarke transformation is executed on each of the sum, so that a three-phase voltage is regained (at step S214) . With this, the processing of the voltage control function is finished.

At a PWM control stage, a calculation that generates pulses with duty cycles proportional to the amplitudes of the respective phase-sequence voltages calculated at the voltage control stage shown in Fig. 6 is executed. A calculation that generates these PWM signals can be realized using a timer circuit that is a piece of hardware.

Furthermore, the threshold TH1 is set in advance by a user, a designer, or others as shown in Fig. 3 before the power conditioning system 1 2 is operated. In addition, the setting value of the threshold TH1 is set as is the case with the first embodiment, and the setting value is, for example, about 10% reduced value of the voltage of the electric power system PW.

With this, the tracking ability for the abrupt voltage change of the electric power system PW can be improved, and an excess current is prevented from flowing through the lowpass filter 18 and the like.

Furthermore, because processing executed at the voltage control stage and the like can be executed by software, the hardware configuration of the control unit can be simplified, which leads to the cost reduction of the power conditioning system 12.

Third Embodiment

(Overview)

In this third embodiment, a voltage control unit 27 of a control unit 22 is configured to include not only the function of passing/bypassing the phase-shift filters 31 and 32, which is implemented in the first embodiment, but also the function of generating a gate block signal GB.

The voltage control unit 27 included in the control unit 22 compares an abrupt change amount with a new threshold TH2, which becomes a second threshold, and if the threshold TH2 is larger, the gate block signal GB is generated. Here, the value of the threshold TH2 is different from that of the first threshold TH1.

(Configuration Example of Photovoltaic Power Generation system)

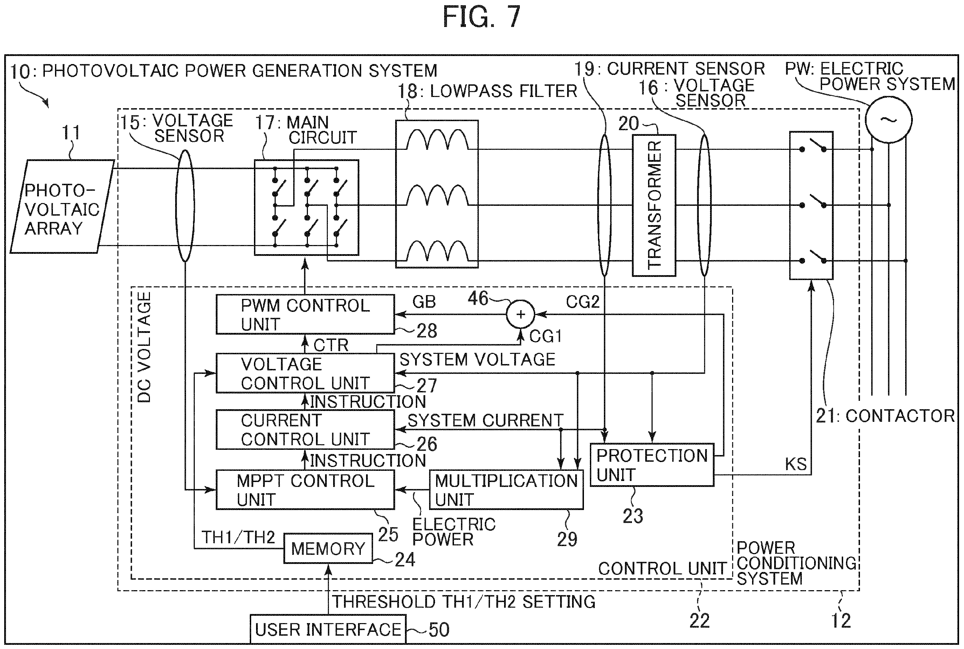

Fig. 7 is an explanatory diagram showing an example of the configuration of a photovoltaic power generation system 10 according to a third embodiment.

The photovoltaic power generation system 10 shown in Fig. 7 is different from the photovoltaic power generation system 10 shown in Fig. 1 according to the first embodiment is in that a logical addition circuit 46 is newly installed. Other configurations are the same, so that an explanation thereof will be omitted.

A gate block control signal CG1, which is an operation control signal output from the voltage control unit 27, is input into one input portion of the logical addition circuit 46. A gate block control signal output from a protection unit 23 is input into the other input portion of the logical addition circuit 46. The gate block control signal CG2 output from the protection unit 23 is output, for example, in a case of the temperature of a main circuit 17 abnormally rising, in a case of an abnormal excess current flowing through the electric power system PW, or in other cases.

The logical addition circuit 46 logically adds the gate block control signal CG1 output from the voltage control unit 27 and the gate block control signal CG2 output from the protection unit 23, and the logical addition circuit 46 outputs a signal from its output portion as the gate block signal GB. The gate block signal GB is input into a PWM control unit 28.

As described in the first embodiment, on receiving the gate block signal GB, the PWM control unit 28 generates an OFF signal that compulsorily turns off the semiconductor switches of the main circuit 17, and stops the operation of the main circuit.

(Configuration Example of Voltage Control Unit and Operation Example Thereof)

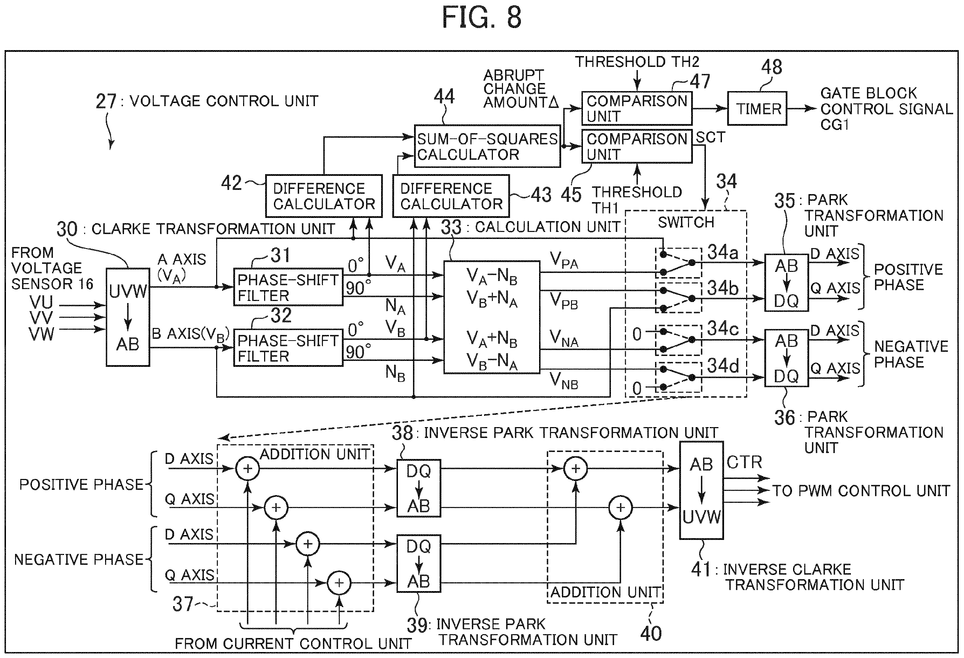

Fig. 8 is an explanatory diagram showing an example of the configuration of the voltage control unit 27 included in a power conditioning system 12 shown in Fig. 7.

The voltage control unit 27 shown in Fig. 8 is configured to include newly a comparison unit 47 and a timer 48 as well as the configuration of the voltage control unit 27 of the first embodiment shown in Fig. 4. Other configurations are the same as those of the voltage control unit 27 shown in Fig. 4, therefore an explanation thereof will be omitted.

The abrupt change amount output from a sum-of-squares calculator 44 is input into a comparison unit 47 that is a second comparison unit. The comparison unit 47 compares the input abrupt change amount with the threshold TH2, and outputs the comparison result. The timer 48, which is an output extension unit, outputs the comparison result output from the comparison unit 47 while extending the output period of the comparison result for a certain time period.

The threshold TH2 is stored in the memory 24 shown in Fig. 1. A memory in which the threshold TH2 is stored is not limited to the memory 24 but it is conceivable that a memory newly prepared is used for storing the threshold TH2. In addition, as is the case with the threshold TH1 described in the first embodiment, the threshold TH2 is stored in the memory 24 through the processing shown in Fig. 3.

Next, the operations of the comparison unit 47 and the timer 48 will be explained. Here, because the operation of the comparison unit 45 is the same as that of the comparison unit 45 of the first embodiment, an explanation thereof will be omitted.

First, the comparison unit 47 compares the abrupt change amount output from the sum-of-squares calculator 44 with the threshold TH2 stored in the memory 24, and outputs the comparison result to the timer 48. If the abrupt change amount is smaller than the threshold TH2, the comparison unit 47 outputs an active signal that is a core of the gate block control signal CG1. The timer 48 keeps the active gate block control signal CG1 as it is for a certain time period and then outputs it.

Here, for example, 0.64 a.u. of the abrupt change amount stipulated by the FRT requirement of "Grid-interconnection Code JEAC-9701-2013", which means that the reduced rate of the voltage of the electric power system PW is about 80 %, is assigned to the setting value of the threshold TH2. Furthermore, about three cycles of the voltage cycles of the electric power system PW stipulated by the abovementioned FRT requirement is assigned to the setting value of the timer 48, for example.

The gate block control signal CG1 output from the timer 48 is input into the logical addition circuit 46. During a time period when the gate block control signal CG1, which is input into the logical addition circuit 46, is active, the gate block control signal GB is input into the PWM control unit 28.

Therefore, the PWM control unit 28 outputs the gate block signal G to the main circuit 17 during the time period set by the timer 48. The main circuit 17 stops its operation during the time period when the gate block signal GB is input into the main circuit 17.

By providing this control, it becomes unnecessary for an excess current to be suppressed by only a lowpass filter 18. Therefore, the increase of the inductance values of the lowpass filter 18 can be suppressed.

When the time period set by the timer 48 elapses and the gate block against the main circuit 17 is released, because phase-shift filters 31 and 32 are in convergent states, the control of the voltage control unit 27 shifts to control for making the outputs of the phase-shift filters 31 and 32 pass. Alternatively, because there may be a case of the phase-shift filters 31 and 32 being halfway to converging depending on the setting time of the timer 48, it is conceivable that control, in which the comparison unit 45 compares the abrupt change amount again and the inputs into the phase-shift filters 31 and 32 are used, is adopted.

As an alternative method, it is conceivable that, only during the time period when the abrupt change amount is larger than the threshold TH1 without the timer 48's setting a time period, the gate block signal GB is output using only the abrupt change amount.

With this, the increase of the inductance values of the lowpass filter 18 can be suppressed, and the cost reduction of the power conditioning system 12 can be realized.

Fourth Embodiment

(Overview)

In a fourth embodiment, a case where the function of the voltage control unit 27 of the third embodiment shown in Fig. 8 is realized not by hardware but realized by programs will be explained. In addition, it will be assumed that other functions in the control unit 22 shown in Fig. 7, that is to say, the functions of the MPPT control unit 25, the current control unit 26, and the PWM control unit 28 are also realized by programs.

(Configuration of Control Unit)

The control unit 22 includes a microcomputer and the like, and a program that realizes the function of the voltage control unit 27 is stored, for example, in the memory 24 shown in Fig. 7. Similarly, programs that realize the functions of the MPPT control unit 25, the current control unit 26, and the PWM control unit 28 are also stored, for example, in the memory 24.

Furthermore, the configuration of a photovoltaic power generation system 10 is similar to that of the photovoltaic power generation system 10 of the third embodiment shown in Fig. 7, and they are different from each other in that the functions of the abovementioned voltage control unit 27 and other units are realized with software processing using programs in this embodiment.

In the above description, although the functions of the MPPT control unit 25, the current control unit 26, the voltage control unit 27, and the PWM control unit 28 of the control unit 22 are assumed to be configured with software processing, it is also conceivable that only the function of the voltage control unit 27 of the control unit 22 is configured with software processing using programs. ⟨Processing Example at Voltage Control Stage⟩

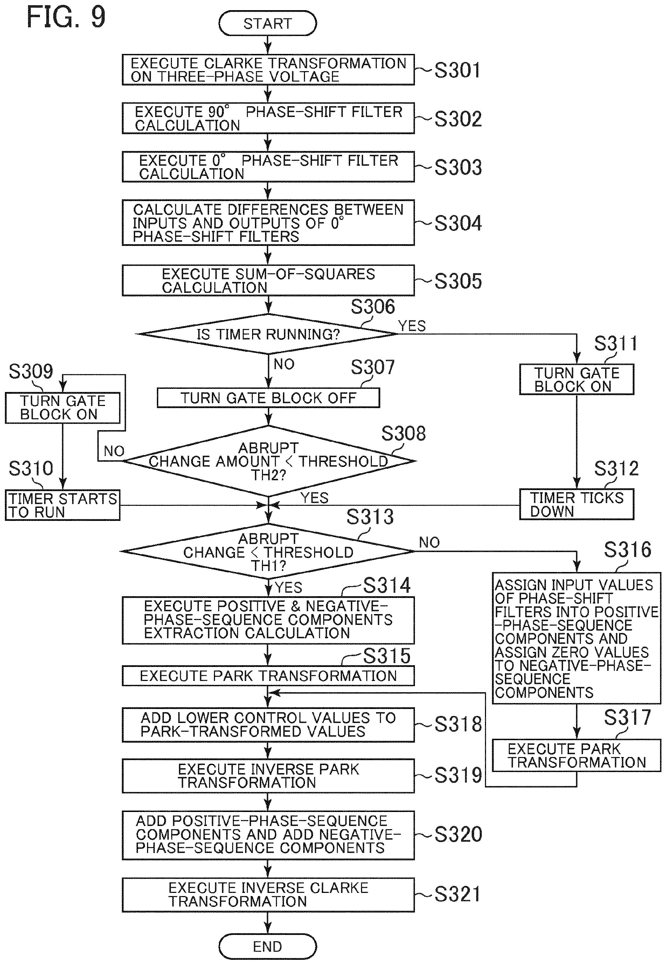

Fig. 9 is a flowchart showing an example of processing executed at the voltage control stage of the voltage control unit 26 according to the fourth embodiment. In Fig. 9, parts of Fig. 9 different from those of Fig. 6 of the second embodiment will be explained in detail. In addition, it will be assumed that thresholds TH1 and TH2 are stored in the memory 24 shown in Fig. 7 in advance through the processing shown in Fig. 3 or the like.

First, processing in steps S301 to 305 shown in Fig. 9 is the same as processing in steps S201 to 205 shown in Fig. 6. An abrupt change amount is obtained through these pieces of processing, and then whether a timer (corresponding to the timer 48) is running or not is checked (at step S306).

If the timer is not counting up its count, that is to say, the timer is not running, a signal that makes the gate block control signal CG1 OFF (inactive) is output (at step S307), and afterward, the abrupt change and the threshold TH2 are compared with each other (at step S308).

If the abrupt change amount is larger than the threshold TH2, a signal that makes the gate block control signal CG1 ON (active) is output (at step S309), and the counter of the timer is cleared to be given its initial value, and the timer starts to operate (at step S310).

At step S306, if the timer is running, the ON state of the gate block control signal is kept as it is (at step S311), and the count of the timer is counted up (at step S312).

If the abrupt change amount is smaller than the threshold TH2 in the processing at step S308, after the processing at step S312 or after the processing at step S310, the abrupt change amount is compared with the threshold TH1 (at step S313).

Processing at steps S314 to 321 after step S313 shown in Fig. 9 is similar to processing at steps S207 to 214 shown in Fig. 6 according to the second embodiment. Through the above series of operations, the comparison between the abrupt change amount and the threshold TH2, the output of the gate block signal GB, and the extension of the output for a certain time period executed by the timer can be realized.

Although the gate block signal is continued to be output, the reason why the operations similar to those executed in the second embodiment, that is to say, the filter calculation and the calculation regarding the D and Q axes are continued is because getting back to the previous state can be speedily realized when the gate block is released.

Also with this, the increase of the inductance values of the lowpass filter 18 can be suppressed, and the cost reduction of the power conditioning system 12 can be realized.

Furthermore, because pieces of processing executed at the voltage control stage and the like can be executed by software, the hardware configuration of the control unit can be simplified, which leads to the cost reduction of the power conditioning system 12.

Fifth Embodiment

(Overview)

In the control unit 22 of a power conditioning system 12 according to a fifth embodiment, an abrupt change amount is compared with a threshold TH1, and if the abrupt change amount is larger than the threshold TH1, phase-shift filters 31 and 32 are bypassed, and at the same time, a current instruction value input into a current control unit 26 is limited to zero.

**EP 3 176 939 B1**

(Configuration Example and Operation Example of Photovoltaic Power Generation System)

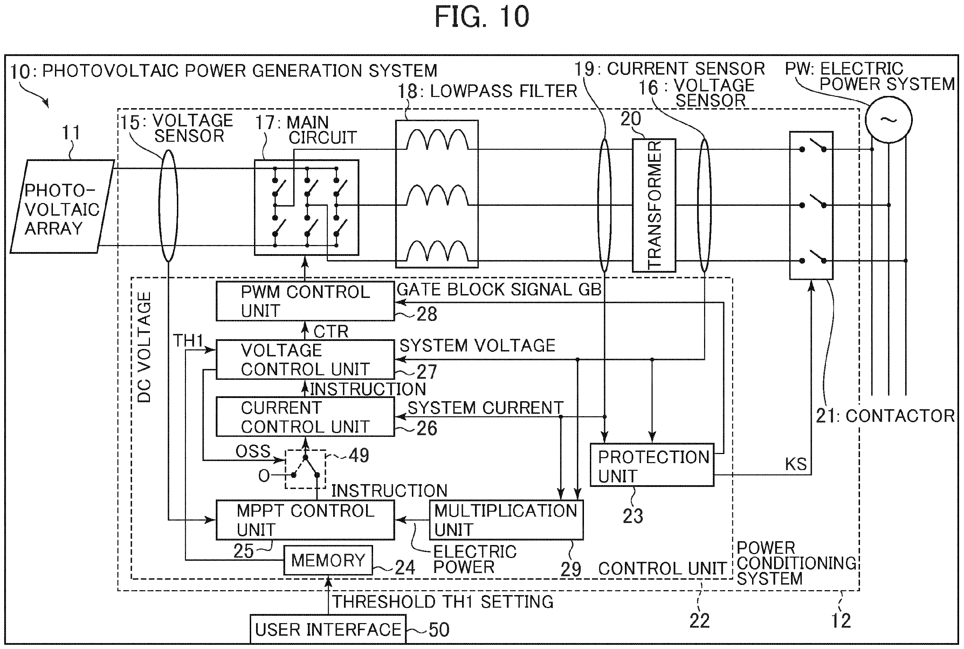

Fig. 10 is an explanatory diagram showing an example of the configuration of a photovoltaic power generation system 10 according to a fifth embodiment.

A difference between the photovoltaic power generation system 10 shown in Fig. 10 and the photovoltaic power generation system 10 according to the first embodiment shown in Fig. 1 lies in that a switch 49, which is a selection unit, is provided between an MPPT control unit 25 and the current control unit 26. Because other configurations are the same as those shown in Fig. 1, an explanation thereof will be omitted.

An instruction value from the MPPT control unit 25 and '0' are respectively input into the switch 49, and an output suppression signal OSS output from a voltage control unit 27 is input into the control terminal of the switch 49. The switch 49 selects the instruction value from the MPPT control unit 25 or '0' on the basis of the output suppression signal OSS, and outputs the selected instruction value or '0' to the current control unit 26.

The voltage control unit 27 outputs the output suppression signal OSS, which is, for example, a high-level signal, if the voltage control unit 27 judges that the abrupt change amount is smaller than the threshold TH1. In this case, the switch 49 executes a switching operation so that a connection route of a solid line shown in Fig. 9 is made. With this, the instruction value output from the MPPT control unit 25 is output to the current control unit 26, and the current control unit 26 executes processing at the current control stage on the basis of the instruction value.

The voltage control unit 27 outputs the output suppression signal OSS, which is, for example, a low-level signal, if the voltage control unit 27 judges that the abrupt change amount is larger than the threshold TH1. The switch 49 executes a switching operation on the basis of this output suppression signal OSS so that a connection route of a dotted line shown in Fig. 9 is made. With this, '0' is input into the current control unit 26 as the instruction value, and the current control unit 26 executes control for preventing a current from flowing.

In the case where the power conditioning system 12 has been sending power to the electric power system, a current corresponding to the power has already been flowing through a main circuit 17. In this case, if an excess current flows owing to the fault of the electric power system or the like, a current much larger than the rated current of the main circuit flows through the main circuit.

In this embodiment, in order to suppress such a current, when there is such an abrupt voltage change as causes differences between voltage values before and after the phase-shift filters 31 and 32, the current control unit 26 not only executes switching the route of the phase-shift filters 31 and 32 so as to prevent a current from flowing through the phase-shift filters 31 and 32, but also suppresses an output current itself, which leads to the reduction of a current flowing through the main circuit 17.

With this, even if a fault or the like occurs in the electric power system PW, the failure frequency of the power conditioning system 12 can be reduced and the reliability of the power conditioning system 12 can be improved.

List of Reference Signs

    10: Photovoltaic Power Generation System
    11: Photovoltaic
    12: Power Conditioning System
    15, 16: Voltage Sensor
    17: Main Circuit
    18: Lowpass Filter
    19: Current Sensor
    20: Transformer
    21: Contactor
    22: Control Unit
    23: Protection Unit
    24: Memory
    25: MPPT Control Unit
    26: Current Control Unit
    27: Voltage Control Unit
    28: PWM Control Unit
    29: Multiplication Unit
    30: Clarke Transformation Unit
    31: Phase-Shift Filter
    32: Phase-Shift Filter

32: Calculation Unit
34: Switch
34a: Selector
34b: Selector
34c: Selector
34d: Selector
35: Park Transformation Unit
36: Park Transformation Unit
37: Addition Unit
38: Inverse Park Transformation Unit
39: Inverse Park Transformation Unit
40: Addition Unit
41: Inverse Clarke Transformation Unit
42: Difference Calculator
43: Difference Calculator
44: Sum-of-Squares Calculator
45: Comparison Unit
46: Logical Addition Unit
47: Comparison Unit
48: Timer
49: Switch
50: User Interface
51: Window
52: Menu Button
53: Decision Button
54: Downward Shift Button
55: Upward Shift Button
PW: Electric Power System

**Claims**

1. An electric power conversion control apparatus comprising:

a main circuit unit configured to convert a DC voltage generated by a photovoltaic (11) into an AC voltage on the basis of a PWM signal;
a filter unit configured to eliminate the harmonic components of the AC voltage output from the main circuit unit;
a PWM control unit (28) configured to generate the PWM signal on the basis of a voltage compensation signal for compensating the PWM signal;
a current control unit (26) configured to generate a current control signal for compensating a current flowing through an electric power system on the basis of an instruction value issued from MPPT control and the current flowing through the electric power system; and
a voltage control unit (27) configured to generate the voltage compensation signal on the basis of the current control signal and a detected voltage,
wherein the voltage control unit (27) includes:

a compensation signal generation unit configured to generate the voltage compensation signal on the basis of the current control signal and the detected voltage; and
an excess current suppression unit configured to suppress an excess current flowing through the filter unit, **characterized in that**,

the excess current suppression unit is configured to calculate a change amount showing the change ratio of the voltage of the electric power system using an input voltage before separating a positive-phase-sequence component and a negative-phase-sequence component from the voltage of the electric power system and an output voltage obtained after separating the positive-phase-sequence component and the negative-phase-sequence component, and if the change amount is larger than a first threshold, the input voltage is output as the detected voltage, and if the change amount is smaller than the first threshold, the output voltage is output as the detected voltage;

wherein the excess current suppression unit includes:

a separation filter configured to separate a positive-phase-sequence component and a negative-phase-sequence component from the voltage of the electric power system;
a difference calculator (42, 43) configured to calculate the difference between the input voltage and the output voltage;
a sum-of-squares calculator (44) configured to square and add the calculation result of the difference calculator (42, 43) to calculate the change amount;
a first comparison unit configured to compare the amount calculated by the sum-of-squares calculator (44) with the first threshold and outputting the comparison result; and
a switch configured to output one of the input voltage and the output voltage on the basis of the comparison result of the first comparison unit, and
the switch is configured to output the input voltage as the detected voltage when it is judged that the change amount is larger than the first threshold, and output the output voltage as the detected voltage when it is judged that the change amount is smaller than the first threshold.

2. The electric power conversion control apparatus according to claim 1, comprising at least two separation filters.

3. The electric power conversion control apparatus according to claim 2,
wherein the separation filters are phase-shift filters (31, 32) into which voltages on the A axis and B axis, which are obtained by executing Clarke transformation on the voltage of the electric power system, are input as the input voltages, and which shift the phases of the input voltages and outputs the phase-shifted voltages as the output voltages; and
the difference calculator (42, 43) is configured to calculate the differences between the input voltages input into the respective separation filters and the 0° phase-shifted output voltages output from the phase-shift filters (31, 32) respectively.

4. The electric power conversion control apparatus according to claim 1, wherein the voltage control unit (27) further includes a second comparison unit that is configured to compare the change amount with a second threshold, and output an operation control signal that stops the operation of the main circuit unit if the change amount is larger than the second threshold.

5. The electric power conversion control apparatus according to claim 4, wherein the voltage control unit (27) further includes an output extension unit that is configured to extend the output period of the operation control signal output from the second comparison unit.

6. The electric power conversion control apparatus according to claim 1, further comprising a selection unit that is configured to select one of the instruction value issued from the MPPT control and a current suppression signal that makes the current control unit (26) not flow a current on the basis of an output suppression signal, and output the selected signal to the voltage control unit (27),
wherein the selection unit is configured to select the current suppression signal when the voltage control unit (27) judges that the change amount is larger than the first threshold, and output the current suppression signal to the current control unit (26).

7. A photovoltaic power generation system (10) comprising:

a photovoltaic (11) that is configured to convert light energy into electric energy; and
an electric power conversion control apparatus according to claim 1 that is configured to convert the electric energy, into which the photovoltaic (11) converts the light energy, into an AC voltage and supplies an electric power system with the AC voltage.

8. The photovoltaic power generation system (10) according to claim 7, comprising at least two separation filters.

9. The photovoltaic power generation system (10) according to claim 8,
wherein the separation filters are phase-shift filters (31, 32) into which voltages on the A axis and B axis, which are obtained by executing Clarke transformation on the voltage of the electric power system, are input as the input voltages, and which shift the phases of the input voltages and outputs the phase-shifted voltages as the output voltages; and

the difference calculator (42, 43) is configured to calculate the differences between the input voltages input into the respective separation filters and the 0° phase-shifted output voltages output from the phase-shift filters (31, 32) respectively.

10. The photovoltaic power generation system (10) according to claim 7, wherein the excess current suppression unit further includes a second comparison unit that is configured to compare change amount with a second threshold, and output an operation control signal that stops the operation of the main circuit unit if the change amount is larger than the second threshold.

11. The photovoltaic power generation system (10) according to claim 10, wherein the voltage control unit (27) further includes an output extension unit configured to extend the output period of the operation control signal output from the first comparison unit.

12. The photovoltaic power conversion generation system (10) according to claim 7,
wherein the electric power conversion control apparatus further includes a selection unit that is configured to select one of the instruction value issued from the MPPT control and a current suppression signal that make the current control unit (26) not flow a current on the basis of an output suppression signal, and output the selected signal to the voltage control unit (27), and
the selection unit is further configured to select the current suppression signal when the voltage control unit (27) judges that the change amount is larger than the first threshold, and output the current suppression signal to the current control unit (26).

13. An electric power conversion control method for an electric power conversion control apparatus according to claim 1, **characterised in that** and comprising the steps:

calculating a change amount showing the change ratio of the voltage of the electric power system using an input voltage before separating a positive-phase-sequence component and a negative-phase-sequence component from the voltage of the electric power system and an output voltage obtained after separating the positive-phase-sequence component and the negative-phase-sequence component, and if the change amount is larger than a first threshold, the input voltage is output as the detected voltage, and if the change amount is smaller than the first threshold, the output voltage is output as the detected voltage;
separating a positive-phase-sequence component and a negative-phase-sequence component from the voltage of the electric power system;
for calculating the difference between the input voltage and the output voltage;
squaring and adding the calculation result of the difference calculator (42, 43) to calculate the change amount;
comparing the amount calculated by the sum-of-squares calculator (44) with the first threshold and outputting the comparison result;
outputting one of the input voltage and the output voltage on the basis of the comparison result of the first comparison unit, and
outputting the input voltage as the detected voltage when it is judged that the change amount is larger than the first threshold, and outputting the output voltage as the detected voltage when it is judged that the change amount is smaller than the first threshold.

**Patentansprüche**

1. Steuervorrichtung für eine elektrische Leistungsumsetzung, die Folgendes enthält:

eine Hauptschaltungseinheit, die konfiguriert ist, eine Gleichspannung, die durch eine Photovoltaikvorrichtung (11) erzeugt wird, auf der Basis eines PWM-Signals in eine Wechselspannung umzusetzen;
eine Filtereinheit, die konfiguriert ist, die harmonischen Komponenten des Wechselspannungsausgangssignals der Hauptschaltungseinheit zu entfernen;
eine PWM-Steuereinheit (28), die konfiguriert ist, das PWM-Signal auf der Grundlage eines Spannungsausgleichssignals zum Ausgleichen des PWM-Signals zu erzeugen;
eine Stromsteuereinheit (26), die konfiguriert ist, ein Stromsteuersignal zum Ausgleichen eines Stromes, der durch ein elektrisches Leistungssystem fließt, auf der Grundlage eines Anweisungswertes, der von der MPPT-Steuerung ausgegeben wird, und des Stroms, der durch das elektrische Leistungssystem fließt, zu erzeugen; und

eine Spannungssteuereinheit (27), die konfiguriert ist, das Spannungsausgleichssignal auf der Grundlage des Stromsteuersignals und einer detektierten Spannung zu erzeugen,
wobei die Spannungssteuereinheit (27) Folgendes enthält:

eine Kompensationssignalerzeugungseinheit, die konfiguriert ist, das Spannungskompensationssignal auf der Grundlage des Stromsteuersignals und der detektierten Spannung zu erzeugen; und
eine Überschussstromunterdrückungseinheit, die konfiguriert ist, einen Überschussstrom, der durch die Filtereinheit fließt, zu unterdrücken, **dadurch gekennzeichnet, dass**

die Überschussstromunterdrückungseinheit konfiguriert ist, einen Änderungsbetrag, der das Änderungsverhältnis der Spannung des elektrischen Leistungssystems zeigt, unter Verwendung einer Eingangsspannung vor dem Trennen einer Komponente mit positiver Phasenfolge und einer Komponente mit negativer Phasenfolge von der Spannung des elektrischen Leistungssystems und einer Ausgangsspannung, die nach dem Trennen der Komponente mit positiver Phasenfolge und der Komponente mit negativer Phasenfolge erhalten wurde, zu berechnen und dann, wenn der Änderungsbetrag größer als ein erster Schwellenwert ist, die Eingangsspannung als die detektierte Spannung ausgegeben wird, und dann, wenn der Änderungsbetrag kleiner als der erste Schwellenwert ist, die Ausgangsspannung als die detektierte Spannung ausgegeben wird;
wobei die Überschussstromunterdrückungseinheit Folgendes enthält:

ein Trennungsfilter, das konfiguriert ist, eine Komponente mit positiver Phasenfolge und eine Komponente mit negativer Phasenfolge von der Spannung des elektrischen Leistungssystems zu trennen;
einen Differenzrechner (42, 43), der konfiguriert ist, die Differenz zwischen der Eingangsspannung und der Ausgangsspannung zu berechnen;
einen Quadratsummenrechner (44), der konfiguriert ist, das Berechnungsergebnis des Differenzrechners (42, 43) zu quadrieren und zu addieren, um den Änderungsbetrag zu berechnen;
eine erste Vergleichseinheit, die konfiguriert ist, den durch den Quadratsummenrechner (44) berechneten Betrag mit dem ersten Schwellenwert zu vergleichen und das Vergleichsergebnis auszugeben; und
einen Schalter, der konfiguriert ist, auf der Grundlage des Vergleichsergebnisses der ersten Vergleichseinheit die Eingangsspannung oder die Ausgangsspannung auszugeben, wobei

der Schalter konfiguriert ist, die Eingangsspannung als die detektierte Spannung auszugeben, wenn beurteilt wird, dass der Änderungsbetrag größer als der erste Schwellenwert ist, und die Ausgangsspannung als die detektierte Spannung auszugeben, wenn beurteilt wird, dass der Änderungsbetrag kleiner als der erste Schwellenwert ist.

2. Steuervorrichtung für eine elektrische Leistungsumsetzung nach Anspruch 1, die mindestens zwei Trennungsfilter enthält.

3. Steuervorrichtung für eine elektrische Leistungsumsetzung nach Anspruch 2, wobei
die Trennungsfilter Phasenverschiebungsfilter (31, 32) sind, in die Spannungen auf der A-Achse und B-Achse, die durch Ausführen einer Clarke-Transformation an der Spannung des elektrischen Leistungssystems erhalten werden, als die Eingangsspannungen eingegeben werden, und die die Phasen der Eingangsspannungen verschieben und die phasenverschobenen Spannungen als die Ausgangsspannungen ausgeben; und
der Differenzrechner (42, 43) konfiguriert ist, die Differenzen zwischen den Eingangsspannungen, die in die entsprechenden Trennungsfilter eingegeben werden, und den um 0° phasenverschobenen Ausgangsspannungen, die von den entsprechenden Phasenverschiebungsfiltern (31, 32) ausgegeben werden, zu berechnen.

4. Steuervorrichtung für eine elektrische Leistungsumsetzung nach Anspruch 1, wobei die Spannungssteuereinheit (27) ferner eine zweite Vergleichseinheit enthält, die konfiguriert ist, den Änderungsbetrag mit einem zweiten Schwellenwert zu vergleichen und ein Betriebssteuersignal, das den Betrieb der Hauptschaltungseinheit einstellt, wenn der Änderungsbetrag größer als der zweite Schwellenwert ist, auszugeben.

5. Steuervorrichtung für eine elektrische Leistungsumsetzung nach Anspruch 4, wobei die Spannungssteuereinheit (27) ferner eine Ausgabeverlängerungseinheit enthält, die konfiguriert ist, den Ausgabezeitraum des Betriebssteuersignals, das von der zweiten Vergleichseinheit ausgegeben wird, zu verlängern.

6. Steuervorrichtung für eine elektrische Leistungsumsetzung nach Anspruch 1, die ferner eine Auswahleinheit enthält, die konfiguriert ist, einen der Anweisungswerte, die von der MPPT-Steuerung ausgegeben werden, und ein Stromunterdrückungssignal, das bewirkt, dass die Stromsteuereinheit (26) auf der Grundlage eines Ausgangsunterdrückungssignals keinen Strom fließen lässt, auszuwählen und das ausgewählte Signal zu der Spannungssteuereinheit (27) auszugeben, wobei
die Auswahleinheit konfiguriert ist, das Stromunterdrückungssignal auszuwählen, wenn die Spannungssteuereinheit (27) beurteilt, dass der Änderungsbetrag größer als der erste Schwellenwert ist, und das Stromunterdrückungssignal zu der Stromsteuereinheit (26) auszugeben.

7. Photovoltaikleistungserzeugungssystem (10), das Folgendes umfasst:

eine Photovoltaikvorrichtung (11), die konfiguriert ist, Lichtenergie in elektrische Energie umzusetzen; und eine Steuervorrichtung für eine elektrische Leistungsumsetzung nach Anspruch 1, die konfiguriert ist, die elektrische Energie, in die die Photovoltaikvorrichtung (11) die Lichtenergie umsetzt, in eine Wechselspannung umzusetzen, und ein elektrisches Leistungssystem mit der Wechselspannung zu versorgen.

8. Photovoltaikleistungserzeugungssystem (10) nach Anspruch 7, das mindestens zwei Trennungsfilter umfasst.

9. Photovoltaikleistungserzeugungssystem (10) nach Anspruch 8, wobei
die Trennungsfilter Phasenverschiebungsfilter (31, 32) sind, in die Spannungen auf der A-Achse und B-Achse, die durch Ausführen einer Clarke-Transformation an der Spannung des elektrischen Leistungssystems erhalten werden, als die Eingangsspannungen eingegeben werden, und die die Phasen der Eingangsspannungen verschieben und die phasenverschobenen Spannungen als die Ausgangsspannungen ausgeben; und
der Differenzrechner (42, 43) konfiguriert ist, die Differenzen zwischen den Eingangsspannungen, die in die entsprechenden Trennungsfilter eingegeben werden, und den um 0° phasenverschobenen Ausgangsspannungen, die von den entsprechenden Phasenverschiebungsfiltern (31, 32) ausgegeben werden, zu berechnen.

10. Photovoltaikleistungserzeugungssystem (10) nach Anspruch 7, wobei die Überschussstromunterdrückungseinheit ferner eine zweite Vergleichseinheit enthält, die konfiguriert ist, den Änderungsbetrag mit einem zweiten Schwellenwert zu vergleichen und ein Betriebssteuersignal, das den Betrieb der Hauptschaltungseinheit einstellt, wenn der Änderungsbetrag größer als der zweite Schwellenwert ist, auszugeben.

11. Photovoltaikleistungserzeugungssystem (10) nach Anspruch 10, wobei die Spannungssteuereinheit (27) ferner eine Ausgabeverlängerungseinheit enthält, die konfiguriert ist, den Ausgabezeitraum des Betriebssteuersignals, das von der zweiten Vergleichseinheit ausgegeben wird, zu verlängern.

12. Photovoltaikleistungserzeugungssystem (10) nach Anspruch 7, wobei
die Steuervorrichtung für eine elektrische Leistungsumsetzung ferner eine Auswahleinheit enthält, die konfiguriert ist, einen der Anweisungswerte, die von der MPPT-Steuerung ausgegeben werden, und ein Stromunterdrückungssignal, das bewirkt, dass die Stromsteuereinheit (26) auf der Grundlage eines Ausgangsunterdrückungssignals keinen Strom fließen lässt, auszuwählen und das ausgewählte Signal zu der Spannungssteuereinheit (27) auszugeben, und
die Auswahleinheit ferner konfiguriert ist, das Stromunterdrückungssignal auszuwählen, wenn die Spannungssteuereinheit (27) beurteilt, dass der Änderungsbetrag größer als der erste Schwellenwert ist, und das Stromunterdrückungssignal zu der Stromsteuereinheit (26) auszugeben.

13. Steuerverfahren für eine elektrische Leistungsumsetzung für eine Steuervorrichtung für eine elektrische Leistungsumsetzung nach Anspruch 1, **gekennzeichnet durch** die folgenden Schritte:

Berechnen eines Änderungsbetrags, der das Änderungsverhältnis der Spannung des elektrischen Leistungssystems zeigt, unter Verwendung einer Eingangsspannung vor dem Trennen einer Komponente mit positiver Phasenfolge und einer Komponente mit negativer Phasenfolge von der Spannung des elektrischen Leistungssystems und einer Ausgangsspannung, die nach dem Trennen der Komponente mit positiver Phasenfolge und der Komponente mit negativer Phasenfolge erhalten wurde, wobei dann, wenn der Änderungsbetrag größer als ein erster Schwellenwert ist, die Eingangsspannung als die detektierte Spannung ausgegeben wird, und dann, wenn der Änderungsbetrag kleiner als der erste Schwellenwert ist, die Ausgangsspannung als die detektierte Spannung ausgegeben wird;
Trennen einer Komponente mit positiver Phasenfolge und einer Komponente mit negativer Phasenfolge von der Spannung des elektrischen Leistungssystems;
zum Berechnen der Differenz zwischen der Eingangsspannung und der Ausgangsspannung:

Quadrieren und Addieren des Berechnungsergebnisses des Differenzrechners (42, 43), um den Änderungsbetrag zu berechnen;

Vergleichen des durch den Quadratsummenrechner (44) berechneten Betrags mit dem ersten Schwellenwert und Ausgeben des Vergleichsergebnisses;

Ausgeben der Eingangsspannung oder der Ausgangsspannung auf der Grundlage des Vergleichsergebnisses der ersten Vergleichseinheit und

Ausgeben der Eingangsspannung als die detektierte Spannung, wenn beurteilt wird, dass der Änderungsbetrag größer als der erste Schwellenwert ist, und Ausgeben der Ausgangsspannung als die detektierte Spannung, wenn beurteilt wird, dass der Änderungsbetrag kleiner als der erste Schwellenwert ist.

## Revendications

1. Appareil de commande de conversion de puissance électrique comprenant :

une unité de circuit principale configurée pour convertir une tension en courant continu (CC) générée par un groupe photovoltaïque (11) en une tension en courant alternatif (CA) sur la base d'un signal de modulation de largeur d'impulsion (PWM) ;

une unité de filtre configurée pour éliminer les composantes harmoniques de la sortie de tension CA provenant de l'unité de circuit principale ;

une unité de commande PWM (28) configurée pour générer le signal PWM sur la base d'un signal de compensation de tension pour compenser le signal PWM ;

une unité de commande de courant (26) configurée pour générer un signal de commande de courant pour compenser un courant s'écoulant à travers un système de puissance électrique sur la base d'une valeur d'instruction issue de la commande MPPT et le courant s'écoulant à travers le système de puissance électrique ; et

une unité de commande de tension (27) configurée pour générer le signal de compensation de tension sur la base du signal de commande de courant et d'une tension détectée,

dans lequel l'unité de commande de tension (27) inclut :

une unité de génération d'un signal de compensation configurée pour générer le signal de compensation de tension sur la base du signal de commande de courant et de la tension détectée ; et

une unité de suppression de courant en excès configurée pour supprimer un courant en excès s'écoulant à travers l'unité de filtre,

**caractérisé en ce que**,

l'unité de suppression de courant en excès est configurée pour calculer une valeur de changement représentant le rapport de changement de la tension du système de puissance électrique en utilisant une tension d'entrée avant de séparer une composante de séquence de phase positive et une composante de séquence de phase négative de la tension du système de puissance électrique et une tension de sortie obtenue après la séparation de la composante de séquence de phase positive et de la composante de séquence de phase négative, et si la valeur de changement est supérieure à un premier seuil, la tension d'entrée est sortie à titre de tension détectée, et si la valeur de changement est inférieure au premier seuil, la tension de sortie est sortie à titre de tension détectée ;

dans lequel l'unité de suppression de courant en excès inclut :

un filtre séparateur configuré pour séparer une composante de séquence de phase positive et une composante de séquence de phase négative de la tension du système de puissance électrique ;

un calculateur de différence (42, 43) configuré pour calculer la différence entre la tension d'entrée et la tension de sortie ;

un calculateur de la somme des carrés (44) configuré pour élever au carré et ajouter le résultat du calcul du calculateur de différence (42, 43) pour calculer la valeur de changement ;

une première unité de comparaison configurée pour comparer la valeur calculée par le calculateur de la somme des carrés (44) avec le premier seuil et sortir le résultat de la comparaison ; et

un commutateur configuré pour sortir une tension parmi la tension d'entrée et la tension de sortie sur la base du résultat de la comparaison de la première unité de comparaison, et

le commutateur est configuré pour sortir la tension d'entrée à titre de tension détectée quand il est jugé que la valeur de changement est supérieure au premier seuil, et pour sortir la tension de sortie à titre de tension détectée quand il est jugé que la valeur de changement est inférieure au premier seuil.

2. Appareil de commande de conversion de puissance électrique selon la revendication 1, comprenant au moins deux filtres séparateurs.

3. Appareil de commande de conversion de puissance électrique selon la revendication 2,
dans lequel les filtres séparateurs sont des filtres de déphasage (31, 32) dans lesquels des tensions sur l'axe A et sur l'axe B, qui sont obtenues en appliquant la transformée de Clarke sur la tension du système de puissance électrique, sont injectées à titre de tensions d'entrée, et qui décalent les phases des tensions d'entrée et sortent les tensions déphasées à titre de tensions de sortie ; et
le calculateur de différence (42, 43) est configuré pour calculer les différences entre les tensions d'entrée injectées dans les filtres séparateurs respectifs et les tensions de sortie déphasées de 0°, sorties des filtres de déphasage (31, 32), respectivement.

4. Appareil de commande de conversion de puissance électrique selon la revendication 1, dans lequel l'unité de commande de tension (27) inclut en outre une deuxième unité de comparaison qui est configurée pour comparer la valeur de changement avec un deuxième seuil, et pour sortir un signal de commande de fonctionnement qui arrête le fonctionnement de l'unité de circuit principale si la valeur de changement est supérieure au deuxième seuil.

5. Appareil de commande de conversion de puissance électrique selon la revendication 4, dans lequel l'unité de commande de tension (27) inclut en outre une unité d'extension de sortie qui est configurée pour étendre la période de sortie du signal de commande de fonctionnement sorti depuis la deuxième unité de comparaison.

6. Appareil de commande de conversion de puissance électrique selon la revendication 1, comprenant en outre une unité de sélection qui est configurée pour sélectionner une valeur parmi la valeur d'instruction issue de la commande MPPT et un signal de suppression de courant qui amène l'unité de commande de courant (26) à ne pas faire s'écouler un courant sur la base d'un signal de suppression de sortie, et pour sortir le signal sélectionner vers l'unité de commande de tension (27),
dans lequel l'unité de sélection est configurée pour sélectionner le signal de suppression de courant quand l'unité de commande de tension (27) juge que la valeur de changement est supérieure au premier seuil, et pour sortir le signal de suppression de courant vers l'unité de commande de courant (26).

7. Système de génération de puissance photovoltaïque (10) comprenant :

   un groupe photovoltaïque (11) qui est configuré pour convertir les énergies lumineuses en énergie électrique ; et
   un appareil de commande de conversion de puissance électrique selon la revendication 1, qui est configuré pour convertir l'énergie électrique, issue de la conversion de l'énergie lumineuse par le groupe photovoltaïque (11), en une tension CA, et pour alimenter un système de puissance électrique en tension CA.

8. Système de génération de puissance photovoltaïque (10) selon la revendication 7, comprenant au moins deux filtres séparateurs.

9. Système de génération de puissance photovoltaïque (10) selon la revendication 8,
dans lequel les filtres séparateurs sont des filtres de déphasage (31, 32) dans lesquels des tensions sur l'axe A et sur l'axe B, qui sont obtenues en appliquant la transformée de Clarke sur la tension du système de puissance électrique, sont injectées à titre de tensions d'entrée, et qui décalent les phases des tensions d'entrée et sortent les tensions déphasées à titre de tensions de sortie ; et
le calculateur de différence (42, 43) est configuré pour calculer les différences entre les tensions d'entrée injectées dans les filtres séparateurs respectifs et les tensions de sortie déphasées de 0°, sorties des filtres de déphasage (31, 32), respectivement.

10. Système de génération de puissance photovoltaïque (10) selon la revendication 7, dans lequel l'unité de suppression de courant en excès inclut en outre une deuxième unité de comparaison qui est configurée pour comparer la valeur de changement avec un deuxième seuil, et pour sortir un signal de commande de fonctionnement qui arrête le fonctionnement de l'unité de circuit principale si la valeur de changement est supérieure au deuxième seuil.

11. Système de génération de puissance photovoltaïque (10) selon la revendication 10, dans lequel l'unité de commande de tension (27) inclut en outre une unité d'extension de sortie configurée pour étendre la période de sortie du signal de commande de fonctionnement sorti depuis la première unité de comparaison.

12. Système de génération de puissance photovoltaïque (10) selon la revendication 7,
dans lequel l'appareil de commande de conversion de puissance électrique inclut en outre une unité de sélection qui est configurée pour sélectionner une valeur parmi la valeur d'instruction issue de la commande MPPT et un signal de suppression de courant qui amène l'unité de commande de courant (26) à ne pas faire s'écouler un courant sur la base d'un signal de suppression de sortie, et pour sortir le signal sélectionné vers l'unité de commande de tension (27), et
l'unité de sélection est en outre configurée pour sélectionner le signal de suppression de courant quand l'unité de commande de tension (27) juge que la valeur de changement est supérieure au premier seuil, et pour sortir le signal de suppression de courant vers l'unité de commande de courant (26).

13. Procédé de commande de conversion de puissance électrique pour un appareil de commande de conversion de puissance électrique selon la revendication 1, **caractérisé en ce qu'**il comprend les étapes consistant à :

calculer une valeur de changement représentant le rapport de changement de la tension du système de puissance électrique en utilisant une tension d'entrée avant de séparer une composante de séquence de phase positive et une composante de séquence de phase négative de la tension du système de puissance électrique et une tension de sortie obtenue après la séparation de la composante de séquence de phase positive et de la composante de séquence de phase négative, et si la valeur de changement est supérieure à un premier seuil, la tension d'entrée est sortie à titre de tension détectée, et si la valeur de changement est inférieure au premier seuil, la tension de sortie est sortie à titre de tension détectée ;
séparer une composante de séquence de phase positive et une composante de séquence de phase négative de la tension du système de puissance électrique ;
calculer la différence entre la tension d'entrée et la tension de sortie ;
élever au carré et ajouter le résultat du calcul du calculateur de différence (42, 43) pour calculer la valeur de changement ;
comparer la valeur calculée par le calculateur de la somme des carrés (44) avec le premier seuil et sortir le résultat de la comparaison ;
sortir une tension parmi la tension d'entrée et la tension de sortie sur la base du résultat de la comparaison de la première unité de comparaison, et sortir la tension d'entrée à titre de tension détectée quand il est jugé que la valeur de changement est supérieure au premier seuil, et sortir la tension de sortie à titre de tension détectée quand il est jugé que la valeur de changement est inférieure au premier seuil.

# FIG. 1

10: PHOTOVOLTAIC POWER GENERATION SYSTEM

19: CURRENT SENSOR  
PW: ELECTRIC POWER SYSTEM

18: LOWPASS FILTER  
16: VOLTAGE SENSOR

15: VOLTAGE SENSOR  
17: MAIN CIRCUIT

11  
PHOTO-VOLTAIC ARRAY

20  
TRANSFORMER

DC VOLTAGE

PWM CONTROL UNIT  
GATE BLOCK SIGNAL GB  
28

CTR

TH1  
VOLTAGE CONTROL UNIT  
SYSTEM VOLTAGE  
27

INSTRUCTION

CURRENT CONTROL UNIT  
SYSTEM CURRENT  
26

INSTRUCTION

MPPT CONTROL UNIT

MULTIPLICATION UNIT

PROTECTION UNIT

KS

21: CONTACTOR

23

ELECTRIC POWER  
29

MEMORY  
25  
24

CONTROL UNIT

POWER CONDITIONING SYSTEM

THRESHOLD TH1 SETTING

USER INTERFACE  
50

22  
12

EP 3 176 939 B1

# FIG. 2

Threshold1:
90          %

50

51

| MENU | ● | ▼ | ▲ |

52      53      54      55

# FIG. 3

START

SET THRESHOLD TH1 — S101

WRITE THRESHOLD
TH1 IN MEMORY — S102

END

# FIG. 4

THRESHOLD TH1

44

SUM-OF-SQUARES CALCULATOR → COMPARISON UNIT |SCT

27 : VOLTAGE CONTROL UNIT

42 ~ DIFFERENCE CALCULATOR    DIFFERENCE CALCULATOR ~43

ABRUPT CHANGE AMOUNTΔ

45    34

35 : PARK TRANSFORMATION UNIT

SWITCH

30 : CLARKE TRANSFORMATION UNIT    33 : CALCULATION UNIT

FROM VOLTAGE SENSOR 16

VU
VV
VW

UVW ↓ AB

A AXIS (V_A)

31
PHASE-SHIFT FILTER

0°
90°

V_A
N_A

B AXIS(V_B)

32
PHASE-SHIFT FILTER

0°
90°

V_B
N_B

$V_A - N_B$
$V_B + N_A$

$V_A + N_B$
$V_B - N_A$

V_PA

V_PB

V_NA

V_NB

34a

34b

0

34c

0

34d

AB ↓ DQ

D AXIS
Q AXIS

POSITIVE PHASE

AB ↓ DQ

D AXIS
Q AXIS

NEGATIVE PHASE

36 : PARK TRANSFORMATION UNIT

38 : INVERSE PARK TRANSFORMATION UNIT

POSITIVE PHASE

D AXIS
Q AXIS

ADDITION UNIT

+
+

DQ ↓ AB

+
+

AB ↓ UVW

CTR

TO PWM CONTROL UNIT

NEGATIVE PHASE

D AXIS
Q AXIS

+
+

DQ ↓ AB

ADDITION UNIT

41 : INVERSE CLARKE TRANSFORMATION UNIT

37

39 : INVERSE PARK TRANSFORMATION UNIT

40

FROM CURRENT CONTROL UNIT

EP 3 176 939 B1

27

# FIG. 5

## FIG. 6

START

EXECUTE CLARKE TRANSFORMATION ON THREE-PHASE VOLTAGE — S201

EXECUTE 90° PHASE-SHIFT FILTER CALCULATION — S202

EXECUTE 0° PHASE-SHIFT FILTER CALCULATION — S203

CALCULATE DIFFERENCES BETWEEN INPUTS AND OUTPUTS OF 0° PHASE-SHIFT FILTERS — S204

EXECUTE SUM-OF-SQUARES CALCULATION — S205

S206
ABRUPT CHANGE < THRESHOLD TH1? — NO

YES

EXECUTE POSITIVE & NEGATIVE-PHASE-SEQUENCE COMPONENTS EXTRACTION CALCULATION — S207

S209
ASSIGN INPUT VALUES OF PHASE-SHIFT FILTERS INTO POSITIVE-PHASE-SEQUENCE COMPONENTS AND ASSIGN ZERO VALUES TO NEGATIVE-PHASE-SEQUENCE COMPONENTS

EXECUTE PARK TRANSFORMATION — S208

S210
EXECUTE PARK TRANSFORMATION

ADD LOWER CONTROL VALUES TO PARK-TRANSFORMED VALUES — S211

EXECUTE INVERSE PARK TRANSFORMATION — S212

ADD POSITIVE-PHASE-SEQUENCE COMPONENTS AND ADD NEGATIVE-PHASE-SEQUENCE COMPONENTS — S213

EXECUTE INVERSE CLARKE TRANSFORMATION — S214

END

# FIG. 7

10: PHOTOVOLTAIC POWER GENERATION SYSTEM

19: CURRENT SENSOR  PW: ELECTRIC POWER SYSTEM

18: LOWPASS FILTER

16: VOLTAGE SENSOR

15: VOLTAGE SENSOR

17: MAIN CIRCUIT

11

PHOTO-VOLTAIC ARRAY

20

TRANSFORMER

21: CONTACTOR

DC VOLTAGE

PWM CONTROL UNIT ~28

GB

46

CG2

CG1

SYSTEM VOLTAGE

CTR

VOLTAGE CONTROL UNIT ~27

INSTRUCTION

CURRENT CONTROL UNIT ~26

SYSTEM CURRENT

INSTRUCTION

MPPT CONTROL UNIT

MULTIPLICATION UNIT

PROTECTION UNIT

KS

ELECTRIC POWER

29

23

TH1/TH2

MEMORY ~25

24

POWER CONDITIONING SYSTEM

CONTROL UNIT

22

12

THRESHOLD TH1/TH2 SETTING

USER INTERFACE ~50

EP 3 176 939 B1

30

# FIG. 8

27 : VOLTAGE CONTROL UNIT

THRESHOLD TH2

48

ABRUPT CHANGE AMOUNT △

47

COMPARISON UNIT

TIMER

GATE BLOCK CONTROL SIGNAL CG1

44 SUM-OF-SQUARES CALCULATOR

COMPARISON UNIT SCT

42 DIFFERENCE CALCULATOR

DIFFERENCE CALCULATOR

43 45 THRESHOLD TH1

34

35 : PARK TRANSFORMATION UNIT

30 : CLARKE TRANSFORMATION UNIT

33 : CALCULATION UNIT

SWITCH

FROM VOLTAGE SENSOR 16

VU VV VW

UVW → AB

A AXIS (V_A)

31 PHASE-SHIFT FILTER 0° 90°

V_A N_A

$V_A - N_B$
$V_B + N_A$

V_PA

34a

AB → DQ

D AXIS Q AXIS POSITIVE PHASE

V_PB

34b

B AXIS (V_B)

32 PHASE-SHIFT FILTER 0° 90°

V_B N_B

$V_A + N_B$
$V_B - N_A$

V_NA

0

34c

AB → DQ

D AXIS Q AXIS NEGATIVE PHASE

V_NB

0

34d

36 : PARK TRANSFORMATION UNIT

38 : INVERSE PARK TRANSFORMATION UNIT

POSITIVE PHASE

D AXIS
Q AXIS

ADDITION UNIT

+ +

DQ → AB

+ +

AB → UVW CTR

TO PWM CONTROL UNIT

NEGATIVE PHASE

D AXIS
Q AXIS

+ +

DQ → AB

ADDITION UNIT

41 : INVERSE CLARKE TRANSFORMATION UNIT

37

39 : INVERSE PARK TRANSFORMATION UNIT

40

FROM CURRENT CONTROL UNIT

EP 3 176 939 B1

FIG. 9

START

EXECUTE CLARKE TRANSFORMATION ON THREE-PHASE VOLTAGE ~S301

EXECUTE 90° PHASE-SHIFT FILTER CALCULATION ~S302

EXECUTE 0° PHASE-SHIFT FILTER CALCULATION ~S303

CALCULATE DIFFERENCES BETWEEN INPUTS AND OUTPUTS OF 0° PHASE-SHIFT FILTERS ~S304

EXECUTE SUM-OF-SQUARES CALCULATION ~S305

S306
IS TIMER RUNNING? — YES → S311 → TURN GATE BLOCK ON

NO

S307
TURN GATE BLOCK OFF

S309
TURN GATE BLOCK ON

S308
ABRUPT CHANGE AMOUNT < THRESHOLD TH2?

NO

S310
TIMER STARTS TO RUN

YES

S312
TIMER TICKS DOWN

S313
ABRUPT CHANGE < THRESHOLD TH1? — NO → S316

YES

S314
EXECUTE POSITIVE & NEGATIVE-PHASE-SEQUENCE COMPONENTS EXTRACTION CALCULATION

S315
EXECUTE PARK TRANSFORMATION

S316
ASSIGN INPUT VALUES OF PHASE-SHIFT FILTERS INTO POSITIVE-PHASE-SEQUENCE COMPONENTS AND ASSIGN ZERO VALUES TO NEGATIVE-PHASE-SEQUENCE COMPONENTS

S317
EXECUTE PARK TRANSFORMATION

S318
ADD LOWER CONTROL VALUES TO PARK-TRANSFORMED VALUES

S319
EXECUTE INVERSE PARK TRANSFORMATION

S320
ADD POSITIVE-PHASE-SEQUENCE COMPONENTS AND ADD NEGATIVE-PHASE-SEQUENCE COMPONENTS

S321
EXECUTE INVERSE CLARKE TRANSFORMATION

END

32

# FIG. 10

10: PHOTOVOLTAIC POWER GENERATION SYSTEM

19: CURRENT SENSOR

PW: ELECTRIC POWER SYSTEM

18: LOWPASS FILTER

16: VOLTAGE SENSOR

15: VOLTAGE SENSOR

17: MAIN CIRCUIT

20

11

PHOTO-VOLTAIC ARRAY

TRANSFORMER

DC VOLTAGE

PWM CONTROL UNIT

GATE BLOCK SIGNAL GB

28

TH1

CTR

VOLTAGE CONTROL UNIT

SYSTEM VOLTAGE

27

INSTRUCTION

CURRENT CONTROL UNIT

SYSTEM CURRENT

26

OSS

49

O

INSTRUCTION

PROTECTION UNIT

KS

21: CONTACTOR

23

MPPT CONTROL UNIT

MULTIPLICATION UNIT

25

MEMORY

24

ELECTRIC POWER

29

CONTROL UNIT

POWER CONDITIONING SYSTEM

THRESHOLD TH1 SETTING

USER INTERFACE

50

22

12

EP 3 176 939 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI7199512376 B

- JP 2004153957 A

**Non-patent literature cited in the description**

- **A. V. TIMBUS et al.** *IEEE ISIE,* 2006

- **B. P. MCGRATH et al.** *IEEE Trans on Power Electronics,* 2005, vol. 20 (4), 877-884